# EUROPÄISCHE PATENTANMELDUNG

(11) **EP 4 134 253 A1**
(43) Veröffentlichungstag der Anmeldung: **15.02.2023**
(21) Anmeldenummer: 22189593.1
(22) Anmeldetag: 09.08.2022
(51) Int. Cl.: B60D 1/62, B60D 1/54, B60D 1/06, B60D 1/64

(54) **ANHÄNGEKUPPLUNG**

(30) Priorität: 13.08.2021 DE 102021121092
(71) Anmelder: ACPS Automotive GmbH, 74379 Ingersheim (DE)
(72) Erfinder: Gentner, Wolfgang, 71711 Steinheim (DE)
(74) Vertreter: Hoeger, Stellrecht & Partner Patentanwälte mbB

(57) **Zusammenfassung**

Um eine Anhängekupplung, umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenkeinheit, mittels welcher der Schwenklagerkörper zur Ausführung einer Schwenkbewegung um eine Schwenkachse zwischen einer Arbeitsstellung und einer Ruhestellung verschwenkbar ist, wobei die Schwenkeinheit eine fahrzeugfeste Schwenklagereinheit und eine Drehblockiereinrichtung zum Blockieren einer Schwenkbewegung des Schwenklagerkörpers um die Schwenkachse zumindest in der Arbeitsstellung umfasst, derart zu verbessern, dass diese Störanfälligkeit bei einer Anhängekupplung der eingangs beschriebenen Art vermieden wird, wird vorgeschlagen, dass die Anhängekupplung am Kugelhals eine Steckdose aufweist und dass die Anhängekupplung mit einer Steckdosensteuereinheit versehen ist.

## Beschreibung

Die Erfindung betrifft eine Anhängekupplung, umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenkeinheit, mittels welcher der Schwenklagerkörper zur Ausführung einer Schwenkbewegung um eine Schwenkachse, insbesondere eine fahrzeugfeste Schwenkachse, zwischen einer Arbeitsstellung und einer Ruhestellung verschwenkbar ist, wobei die Schwenkeinheit eine fahrzeugfeste Schwenklagereinheit und eine Drehblockiereinrichtung zum Blockieren einer Schwenkbewegung des Schwenklagerkörpers um die Schwenkachse zumindest in der Arbeitsstellung umfasst.

Derartige Anhängekupplungen sind aus dem Stand der Technik bekannt.

Bei diesen ist üblicherweise die Schwenkeinheit durch eine außerhalb derselben, beispielsweise fahrzeugseitig angeordnete, insbesondere von einem Zulieferer gelieferte Schwenksteuereinheit gesteuert.

Bei derartigen Anhängekupplungen und Schwenkeinheiten besteht stets das Problem der wechselseitigen Abstimmung zwischen diesen und einer daraus resultierenden Störanfälligkeit.

Der Erfindung liegt daher die Aufgabe zugrunde, diese Störanfälligkeit bei einer Anhängekupplung der eingangs beschriebenen Art zu vermeiden.

Diese Aufgabe wird bei einer Anhängekupplung der eingangs beschriebenen Art erfindungsgemäß dadurch gelöst, dass in der Schwenkeinheit eine Schwenksteuereinheit integriert ist.

Mit einer derartigen Integration der Schwenksteuereinheit in die Schwenkeinheit lassen sich Abstimmungsprobleme lösen und auch die Montage der Anhängekupplung an einem Kraftfahrzeug vereinfachen.

Eine bevorzugte Lösung sieht vor, dass die Schwenkeinheit ein Gesamtgehäuse aufweist, in welchem die Schwenklagereinheit, die Drehblockiereinrichtung und ein Antriebsmotor angeordnet sind und dass die Schwenksteuereinheit in dem Gesamtgehäuse angeordnet ist, so dass die Schwenkeinheit selbst in der Lage ist, alle Steuerungsfunktionen autark auszuführen und somit lediglich vom Fahrzeug ein Startsignal für das Starten der Schwenkbewegung übermittelt werden muss.

Hinsichtlich der Ausbildung der Schwenksteuereinheit sind die unterschiedlichsten Möglichkeiten denkbar.

Eine vorteilhafte Lösung sieht vor, dass die Schwenksteuereinheit die Schwenkbewegungen des Kugelhalses um die Schwenkachse mittels eines Schwenkbewegungssensors erfasst.

Ein Schwenkbewegungssensor ist absolut messend und schafft somit die Möglichkeit unabhängig von einem vorherigen Betriebszustand jederzeit die Stellung des Kugelhalses zu erfassen.

Damit ist die Schwenksteuereinheit in der Lage, exakt die Lage des Kugelhalses relativ zum Kraftfahrzeug und zur Arbeitsstellung und Ruhestellung zu erkennen.

Besonders vorteilhaft lässt sich dies dadurch realisieren, dass der Schwenkbewegungssensor Schwenkbewegungen des Schwenklagerkörpers um die Schwenkachse erfasst.

Dabei kann der Schwenkbewegungssensor so an der Schwenkeinheit angeordnet sein, dass er direkt die Schwenklage des Schwenklagerkörpers relativ zur Schwenkeinheit, beispielsweise zum Gesamtgehäuse derselben erfasst.

Eine andere vorteilhafte Möglichkeit sieht vor, dass der Schwenklagerkörper über ein Kopplungselement mit dem Schwenkbewegungssensor zusammenwirkt.

Hinsichtlich der Anordnung des Schwenkbewegungssensors sind die unterschiedlichsten Möglichkeiten denkbar.

So sieht eine vorteilhafte Lösung vor, dass der Schwenkbewegungssensor auf einem Sensorträger angeordnet ist, der sich in geeigneter Weise und einfach in dem Gesamtgehäuse anordnen und montieren lässt.

Eine weitere vorteilhafte Ausführungsform der Schwenkeinheit sieht vor, dass die Schwenksteuereinheit Funktionen der Drehblockiereinrichtung mittels eines Funktionssensors erfasst.

Diese Funktionen der Drehblockiereinrichtung betreffen insbesondere die Drehblockierstellung oder eine Lösestellung der Drehblockiereinrichtung.

Beispielsweise ist der Funktionssensor dabei in der Lage, eine oder mehrere dieser Funktionsstellungen der Drehblockiereinrichtung zu erfassen.

Eine besonders einfache Lösung sieht vor, dass die Schwenksteuereinheit mittels des Funktionssensors mindestens eine Stellung der Drehblockiereinrichtung, das heißt beispielsweise die Drehblockierstellung oder die Lösestellung, erfasst.

Diese Erfassung der Stellung der Drehblockiereinrichtung kann beispielsweise dadurch erfolgen, dass die Schwenksteuereinheit die Stellung der Drehblockiereinrichtung durch Abtasten eines Elements derselben, das heißt eines Elements der Drehblockiereinrichtung, mittels des Funktionssensors erfasst, wobei dieses Abtasten des Elements der Drehblockiereinrichtung entweder unmittelbar durch den Funktionssensor oder mittelbar über eine dem Element der Drehblockiereinrichtung zugeordnete Vorrichtung erfolgt.

Hinsichtlich der Anordnung des Funktionssensors ist es ebenfalls von Vorteil, wenn der Funktionssensor auf einem Sensorträger angeordnet ist und sich dadurch in einfacher Weise in dem Gesamtgehäuse montieren lässt.

Eine weitere zweckmäßige Lösung sieht vor, dass die Schwenksteuereinheit eine Drehzahl des Antriebsmotors mittels eines Drehzahlsensors erfasst.

Mit einem Drehzahlsensor besteht somit die Möglichkeit, unmittelbar am Antriebsmotor selbst zu erkennen, ob dieser ein- oder ausgeschaltet ist, ohne davon abhängig zu sein, inwieweit sich der Betrieb des Antriebsmotors auf die Funktionen der Schwenkeinheit auswirkt.

Besonders günstig ist es dabei, wenn der Drehzahlsensor einer Abtriebswelle des Antriebsmotors zugeordnet ist, so dass eine unmittelbare Information über die Funktionen des Antriebsmotors, insbesondere die Drehzahl und Drehrichtung desselben, vorliegt.

Auch hinsichtlich des Drehzahlsensors hat es sich als besonders vorteilhaft erwiesen, wenn der Drehzahlsensor auf einem Sensorträger angeordnet und somit in einfacher Weise in der Schwenkeinheit montierbar ist.

Eine weitere vorteilhafte Lösung sieht vor, dass die Schwenksteuereinheit eine Temperatur in der Schwenkeinheit, insbesondere im Gesamtgehäuse, mittels eines Temperatursensors erfasst.

Dies erlaubt beispielsweise der Schwenksteuereinheit eine Anpassung von erfassten Parametern, wie beispielsweise Grenzwerten und/oder Stromwerten und/oder Stromschwellen, in Abhängigkeit von der Temperatur.

Insbesondere ist auch der Temperatursensor auf einem Sensorträger angeordnet.

Zur einfachen Kontaktierung der Sensorträger sind diese vorteilhafterweise mit Steckkontaktelementen versehen.

Eine besonders kompakte und hinsichtlich der Erfassung der erforderlichen Parameter besonders zweckmäßige Lösung sieht vor, dass das Gesamtgehäuse einen die Schwenklagereinheit, die Drehblockiereinheit sowie mindestens eine Getriebeeinheit aufnehmenden Schwenkbetriebsgehäuseabschnitt aufweist und dass die Sensorträger dem Schwenkbetriebsgehäuseabschnitt zugeordnet sind.

Diese Lösung hat den großen Vorteil, dass damit die von den Sensoren zu erfassenden Größen in einfacher Weise und möglichst nahe an den jeweiligen Funktionseinheiten erfasst werden können.

Eine besonders günstige Lösung sieht vor, dass die Sensorträger in dem Schwenkbetriebsgehäuseabschnitt selbst angeordnet sind.

Eine konstruktiv besonders vorteilhafte Lösung sieht vor, dass die Getriebeeinheit ein Verteilgetriebe aufweist, welches abtriebsseitig einerseits den Schwenklagerkörper und andererseits die Drehblockiereinrichtung antreibt.

Damit besteht in einfacher Weise die Möglichkeit, mit einem einzigen Antriebsmotor sowohl den Schwenklagerkörper anzutreiben und die Schwenkbewegung durchzuführen, als auch die Drehblockiereinrichtung derart zu betätigen, dass diese entweder in die Drehblockierstellung oder die Lösestellung übergeht.

Insbesondere ist in diesem Fall vorgesehen, dass die Getriebeeinheit ein Verteilgetriebe aufweist, welches abtriebsseitig einerseits den Schwenklagerkörper und andererseits die Drehblockiereinrichtung antreibt und mindestens einer der Sensorträger antriebsseitig des Verteilgetriebes angeordnet ist.

Dabei kann der Sensorträger unmittelbar auf der Antriebsseite des Verteilgetriebes angeordnet sein.

Noch vorteilhafter ist es jedoch, wenn das Verteilgetriebe durch ein Untersetzungsgetriebe angetrieben ist und wenn mindestens einer der Sensorträger dem Untersetzungsgetriebe zugeordnet ist, so dass sich im Bereich des Untersetzungsgetriebes in unmittelbarer Nähe zu den sich bewegenden Elementen mindestens einer der Sensoren angeordnet werden kann.

Noch günstiger ist es, wenn das Untersetzungsgetriebe ein antriebsseitiges Getriebeelement und ein abtriebsseitiges Getriebeelement aufweist und wenn mindestens einer der Sensorträger zwischen dem antriebsseitigen Getriebeelement und dem abtriebsseitigen Getriebeelement angeordnet ist.

Eine hinsichtlich ihrer Kompaktheit besonders günstige Lösung sieht vor, dass mehrere aus der Menge der Sensoren, umfassend den Schwenkbewegungssensor, den Funktionssensor, den Drehzahlsensor und den Temperatursensor, auf einem gemeinsamen Sensorträger angeordnet sind, so dass sich die von den Sensoren ermittelten Informationen lokal konzentriert in dem Schwenksystem erfassen lassen.

Ferner ist vorzugsweise vorgesehen, dass der Sensorträger Steckkontaktelemente zur Kontaktierung der auf diesem angeordneten Komponenten, wie z.B. Sensoren, umfasst.

Eine besonders günstige Lösung sieht vor, dass das Gesamtgehäuse einen die Schwenklagereinheit, die Drehblockiereinheit und mindestens eine Getriebeeinheit aufnehmenden Schwenkbetriebsgehäuseabschnitt aufweist und dass die Schwenksteuereinheit dem Schwenkbetriebsgehäuseabschnitt zugeordnet ist, das heißt, dass die gesamte Schwenksteuereinheit eine derartige Zuordnung erfährt.

Insbesondere lässt sich dies dadurch vorteilhaft realisieren, dass die Schwenksteuereinheit in dem Schwenkbetriebsgehäuseabschnitt angeordnet ist.

Ferner ist vorzugsweise vorgesehen, dass die Getriebeeinheit ein Verteilgetriebe aufweist, welches abtriebsseitig einerseits den Schwenklagerkörper und andererseits die Drehblockiereinrichtung antreibt und dass die Schwenksteuereinheit antriebsseitig des Verteilgetriebes angeordnet ist, so dass sich insbesondere die für die Funktionen der Schwenksteuereinheit erforderlichen Informationen in unmittelbar räumlicher Umgebung derselben erfassen lassen.

Besonders zweckmäßig ist es, wenn das Verteilgetriebe durch ein Untersetzungsgetriebe angetrieben ist und wenn die Schwenksteuereinheit dem Untersetzungsgetriebe zugeordnet ist.

Insbesondere ist vorgesehen, dass das Untersetzungsgetriebe ein antriebsseitiges Getriebeelement und ein abtriebsseitiges Getriebeelement aufweist und dass die Schwenksteuereinheit zwischen dem antriebsseitigen Getriebeelement und dem abtriebsseitigen Getriebeelement angeordnet ist.

Eine alternative Lösung hierzu sieht vor, dass das Gesamtgehäuse einen den Antriebsmotor aufweisenden Motorgehäuseabschnitt aufweist und dass die Schwenksteuereinheit dem Motorgehäuseabschnitt zugeordnet ist.

Im Rahmen der erfindungsgemäßen Lösung besteht aber auch die Möglichkeit, die Schwenksteuereinheit in Teileinheiten zu unterteilen und einen Teil der Schwenksteuereinheit im Schwenkbetriebsgehäuseabschnitt anzuordnen und einen anderen Teil der Schwenksteuereinheit im Motorgehäuseabschnitt a nzuord nen.

Eine andere vorteilhafte Lösung sieht vor, dass die Schwenksteuereinheit im Motorgehäuseabschnitt angeordnet ist.

Eine weitere vorteilhafte Ausführungsform sieht vor, dass die Schwenkeinheit ein Gesamtgehäuse aufweist, in welchem die Schwenklagereinheit und ein Antriebsmotor angeordnet sind und dass eine auf einer Schaltungsplatine angeordnete Steuerschaltung der Schwenksteuereinheit in dem Gesamtgehäuse angeordnet ist.

Zweckmäßigerweise ist das Gesamtgehäuse so ausgebildet, dass es einen eine Schwenklagereinheit sowie mindestens eine Getriebeeinheit aufnehmenden Schwenkbetriebsgehäuseabschnitt aufweist und dass die auf einer Schaltungsplatine angeordnete Steuerschaltung der Schwenksteuereinheit dem Schwenkbetriebsgehäuseabschnitt zugeordnet ist.

Vorzugsweise ist ferner vorgesehen, dass die auf einer Schaltungsplatine angeordnete Steuerschaltung der Schwenksteuereinheit in dem Schwenkbetriebsgehäuseabschnitt angeordnet ist.

Eine besonders vorteilhafte Ausführungsform sieht vor, dass die Getriebeeinheit ein Verteilgetriebe aufweist, welches abtriebsseitig einerseits den Schwenklagerkörper und andererseits die Drehblockiereinrichtung antreibt und dass die auf einer Schaltungsplatine angeordnete Steuerschaltung der Schwenksteuereinheit antriebsseitig des Verteilgetriebes angeordnet ist.

Damit ist eine besonders kompakte Lösung gegeben.

Diese Lösung kann insbesondere noch dadurch verbessert werden, dass das Verteilgetriebe durch ein Untersetzungsgetriebe angetrieben ist und dass die auf einer Schaltungsplatine angeordnete Steuerschaltung der Schwenksteuereinheit dem Untersetzungsgetriebe zugeordnet ist.

Das Untersetzungsgetriebe schafft die Möglichkeit, die Schwenksteuereinheit möglichst nahe an den für die jeweiligen Sensoren geeigneten Elementen anzuordnen und insbesondere ist dabei vorgesehen, dass das Untersetzungsgetriebe ein antriebsseitiges Getriebeelement und ein abtriebsseitiges Getriebeelement aufweist und dass die auf einer Schaltungsplatine angeordnete Steuerschaltung der Schwenksteuereinheit zwischen dem antriebsseitigen Getriebeelement und dem abtriebsseitigen Getriebeelement angeordnet ist.

Ergänzend oder alternativ dazu ist es ebenfalls möglich, dass das Gesamtgehäuse einen den Antriebsmotor aufweisenden Motorgehäuseabschnitt aufweist und dass die auf einer Schaltungsplatine angeordnete Steuerschaltung der Schwenksteuereinheit dem Motorgehäuseabschnitt zugeordnet ist.

Zur vorteilhaften Kontaktierung ist auch die Schaltungsplatine mit Steckkontaktelementen versehen.

Besonders kompakt ist die Lösung dann, wenn die auf einer Schaltungsplatine angeordnete Steuerschaltung der Schwenksteuereinheit in dem Motorgehäuseabschnitt angeordnet ist.

Dabei kann die Schwenksteuereinheit auch teilweise in dem Schwenkbetriebsgehäuseabschnitt und teilweise in dem Motorgehäuseabschnitt angeordnet sein.

Eine weitere vorteilhafte Lösung sieht vor, dass die Schwenksteuereinheit eine Steuerschaltung aufweist, welche mittels einer Datenverarbeitungseinheit einerseits mit einem fahrzeugseitigen BUS-System kommuniziert und andererseits die Schwenkeinheit gemäß einem vorgegebenen Programmcode steuert.

Im einfachsten Fall ist dabei die Datenverarbeitungseinheit als ein die Funktionen ausführender Prozessor ausgebildet.

Ferner ist vorzugsweise vorgesehen, dass die Schwenksteuereinheit eine Steuerschaltung aufweist, welche mittels einer Datenverarbeitungseinheit und einer Motorantriebsschaltung für den Antriebsmotor den Antriebsmotor zum Verschwenken des Kugelhalses zwischen der Arbeitsstellung und der Ruhestellung steuert.

Ein derartiges Steuern des Antriebsmotors mittels der Motorantriebsschaltung umfasst vorzugsweise auch die Überwachung des Motorstroms für den Antriebsmotor, so dass beispielsweise bei einer Blockierung der Schwenkbewegung des Kugelhalses dies über einen Anstieg des Stroms für den Antriebsmotor durch die Datenverarbeitungseinheit erkannt werden kann.

Ferner ist vorzugsweise vorgesehen, dass die Datenverarbeitungseinheit mittels des Schwenkbewegungssensors erfasst, ob der Kugelhals in der Arbeitsstellung oder der Ruhestellung steht, was aufgrund der absolut messenden Eigenschaft des Schwenkbewegungssensors zu jeder Zeit und unabhängig von vorherigen Betriebszuständen möglich ist.

Ergänzend dazu kann die Datenverarbeitungseinheit auch zusätzlich noch so ausgebildet sein, dass sie mittels des Schwenkbewegungssensors Zwischenstellungen des Kugelhalses zwischen der Arbeitsstellung und der Ruhestellung des Kugelhalses erfasst, was aufgrund der absolut messenden Eigenschaft des Schwenkbewegungssensors zu jeder Zeit und unabhängig von vorherigen Betriebszuständen möglich ist.

In allen Fällen, in welchen Stellungen des Kugelhalses erfasst werden, werden vorzugsweise der Datenverarbeitungseinheit Referenzwerte des Schwenkbewegungssensors für die einzelnen Stellungen vorgegeben und diese werden dann von der Datenverarbeitungseinheit mit den vom Schwenkbewegungssensor gemessenen Werten verglichen.

Eine weitere vorteilhafte Lösung sieht vor, dass die Datenverarbeitungseinheit mittels des Funktionssensors erfasst, ob die Drehblockiereinrichtung in einer Drehblockierstellung oder einer Lösestellung steht.

Dies kann entweder unmittelbar durch den der Drehblockiereinrichtung zugeordneten Funktionssensor erfolgen oder auch mittelbar durch eine mit der Drehblockiereinrichtung zusammenwirkende Einheit, beispielsweise eine Sicherungsvorrichtung.

Um während des Verschwenkens des Kugelhalses die einzelnen, von der Schwenkeinheit durchzuführenden Funktionsphasen erfassen zu können, ist vorzugsweise vorgesehen, dass die Datenverarbeitungseinheit nach einem Start des Antriebsmotors einen Wert des Drehzahlsensors und einen Wert des Schwenkbewegungssensors miteinander vergleicht.

Bei einem derartigen Vergleich besteht die Möglichkeit, dass die Datenverarbeitungseinheit erkennen kann, wie lange der Antriebsmotor benötigt, um die Drehblockiereinrichtung zu betätigen und ab wann eine Schwenkbewegung des Schwenklagerkörpers und insbesondere des Kugelhalses einsetzt.

Eine weitere vorteilhafte Lösung sieht vor, dass die Datenverarbeitungseinheit aufgrund eines dieser über einen BUS-Anschluss übermittelten Startsignals den Antriebsmotor startet, um eine Schwenkbewegung des Kugelhalses auszuführen.

Des Weiteren hat es sich als vorteilhaft erwiesen, wenn die Datenverarbeitungseinheit aufgrund des Startsignals den Antriebsmotor nur dann startet, wenn der Kugelhals in der Ruhestellung oder der Arbeitsstellung steht.

Dies kann beispielsweise von der Datenverarbeitungseinheit durch eine Abfrage des Schwenkbewegungssensors erfasst werden.

Dies kann aber auch dadurch erfasst werden, dass bei der vorhergehenden Bewegung des Kugelhalses von der Arbeitsstellung in die Ruhestellung oder von der Ruhestellung in die Arbeitsstellung der Anstieg des Stroms des Antriebsmotors beim Anschlagen an der Endstellung erfasst und abgespeichert wird, so dass dadurch erkennbar ist, dass eine der Endstellungen bei der Schwenkbewegung des Kugelhalses erreicht wurde.

Darüber hinaus besteht auch die Möglichkeit durch den Funktionssensor, beispielsweise durch Abtasten der Drehblockiereinrichtung festzustellen, ob beispielsweise die Arbeitsstellung erreicht wurde.

Eine weitere vorteilhafte Lösung sieht vor, dass die Datenverarbeitungseinheit während des Betriebs des Antriebsmotors die Schwenkbewegung des Kugelhalses mittels des Schwenkbewegungssensors überwacht, das heißt wie bereits ausgeführt, durch Vergleiche mit in der Datenverarbeitungseinheit abgespeicherten Referenzwerten.

Insbesondere ist es dabei auch möglich, dass die Datenverarbeitungseinheit mittels des Schwenkbewegungssensors das Erreichen der Arbeitsstellung und der Ruhestellung erkennt.

Dies kann - wie bereits erwähnt - durch Vergleiche mit abgespeicherten Referenzwerten erfolgen.

Eine weitere vorteilhafte Lösung sieht vor, dass die Datenverarbeitungseinheit die Stromaufnahme des Antriebsmotors mittels der Motorantriebsschaltung überwacht und den Antriebsmotor bei Überschreiten einer vorgegebenen Stromschwelle stoppt.

Ein derartiges Überschreiten einer vorgegebenen Stromschwelle kann beispielsweise dann auftreten, wenn der Kugelhals bei seiner Bewegung zwischen der Arbeitsstellung und der Ruhestellung auf ein Hindernis trifft und dabei in seiner Weiterbewegung blockiert wird.

Ein derartiges Überschreiten der Stromschwelle tritt aber auch auf, wenn der Kugelhals beim Erreichen der Arbeitsstellung oder der Ruhestellung auf einen Anschlag trifft.

Um diese beiden Situationen voneinander sicher unterscheiden zu können ist vorzugsweise in diesen Fällen vorgesehen, dass die Datenverarbeitungseinheit zusätzlich den Schwenkbewegungssensor abfragt und dessen Werte mit den Referenzwerten vergleicht, um zu erkennen, in welcher Phase der Bewegung zwischen der Arbeitsstellung und der Ruhestellung die Stromschwelle überschritten wurde.

Insbesondere sieht eine vorteilhafte Lösung zur Erkennung der Arbeitsstellung oder der Ruhestellung vor, dass die Datenverarbeitungseinheit dann, wenn diese mittels des Schwenkbewegungssensors erfasst, dass die Arbeitsstellung oder die Ruhestellung des Kugelhalses erreicht ist und/oder die Stromaufnahme des Antriebsmotors die vorgegebene Stromschwelle überschreitet, ein Gut-Signal erzeugt und am BUS-Anschluss ausgibt.

Ferner ist vorzugsweise vorgesehen, dass die Datenverarbeitungseinheit dann, wenn die Stromaufnahme des Antriebsmotors die vorgegebene Stromschwelle außerhalb der Arbeitsstellung oder der Ruhestellung des Kugelhalses überschreitet, ein Schlecht-Signal erzeugt und am BUS-Anschluss ausgibt.

Ferner ist vorzugsweise vorgesehen, dass die Datenverarbeitungseinheit den Wert des Drehzahlsensors und den Wert des Schwenkbewegungssensors zumindest während einer für ein Lösen von Sicherungseinrichtungen erforderlichen Phase vergleicht und dann, wenn der Wert des Schwenkbewegungssensors nicht nach dieser zeitlich vorgegebenen Phase zunimmt, ein Schlecht-Signal am BUS-Anschluss ausgibt.

Eine weitere vorteilhafte Lösung sieht vor, dass die Datenverarbeitungseinheit mit dem Funktionssensor einen Zustand der Drehblockiereinrichtung erfasst und in der Arbeitsstellung bei vorliegender Drehblockierstellung ein Gut-Signal am BUS-Anschluss ausgibt und in der Arbeitsstellung bei nicht vorliegender Drehblockierstellung ein Schlecht-Signal am BUS-Anschluss ausgibt.

Darüber hinaus ist aus dem Stand der Technik bekannt, eine Steckdosensteuereinheit zum Bestromen der Kontakte der Steckdose zum Bestromen von Beleuchtungseinheiten eines am Kugelhals angehängten Anhängers oder einer an diesem montierten Trägereinheit in der Fahrzeugkarosserie vorzusehen.

Auch diesbezüglich ist dann, wenn die Steckdose am Kugelhals der Anhängekupplung angeordnet ist, die Abstimmung zwischen der von einem weiteren Lieferanten gelieferten Steckdosensteuereinheit und der Anhängekupplung beim Einbau im Kraftfahrzeug mit Problemen verbunden.

Diese Aufgabe wird bei einer Anhängekupplung nach dem Oberbegriff des Anspruchs 1 oder gemäß einer der der voranstehenden Ausführungsformen erfindungsgemäß dadurch gelöst, dass die Anhängekupplung am Kugelhals eine Steckdose aufweist und mit einer Steckdosensteuereinheit versehen ist, welche Kontaktanschlüsse zum Bestromen von Kontakten der Steckdöse aufweist, und dass die Steckdosensteuereinheit zur Stromversorgung zwei Versorgungsanschlüsse und zur Ansteuerung einen BUS-Anschluss aufweist.

Dadurch, dass die Anhängekupplung mit der Steckdosensteuereinheit versehen ist, besteht die Möglichkeit, diese als Teil der Anhängekupplung zu verbauen und somit auch Fehlerquellen beim Bestromen der Steckdose zu vermeiden.

Besonders zweckmäßig ist es, wenn die Steckdosensteuereinheit eine Steckdosensteuerschaltung mit einem Prozessor und eine Kontaktsteuerschaltung aufweist, über welche der Prozessor die Kontaktanschlüsse für die Kontakte der Steckdose ansteuern kann.

Bei der erfindungsgemäßen Steckdosensteuerschaltung geht es jedoch nicht nur darum, die Kontaktanschlüsse zu bestromen, sondern auch die Funktionsfähigkeit der mit der Anhängekupplung verbundenen Einheit, sei es ein Anhänger oder ein Lastenträger, sicherzustellen.

Aus diesem Grund ist vorgesehen, dass der Prozessor zusammen mit der Kontaktsteuerschaltung die Kontaktanschlüsse, insbesondere ständig, überwacht.

Eine derartige Überwachung der Kontaktanschlüsse kann in unterschiedlichster Art und Weise erfolgen.

Eine vorteilhafte Lösung sieht vor, dass der Prozessor mittels der Kontaktsteuerschaltung die Kontaktanschlüsse bei Nichtbestromung im Hinblick auf deren Widerstand gegen Masse überwacht, das heißt, der Prozessor prüft mittels der Kontaktsteuerschaltung, ob der Widerstand zwischen dem Kontaktanschluss und Masse einer mit dem Kontakt der Steckdose verbundenen Last, sei es eine Beleuchtungseinheit oder ein anderer Verbraucher, entsprechen kann.

Insbesondere ist dabei die Steckdosensteuerschaltung so ausgebildet, dass der Prozessor bei Abweichungen der Kontaktanschlüsse von einem vorgegebenen Widerstand gegen Masse ein Fehlersignal an den BUS-Anschluss ausgibt.

Darüber hinaus ist vorzugsweise vorgesehen, dass der Prozessor mit der Kontaktsteuerschaltung die Kontaktanschlüsse bei Bestromung im Hinblick auf den fließenden Strom überwacht, das heißt, dass der Prozessor mittels der Kontaktsteuerschaltung ständig überprüft, ob der bei der Bestromung fließende Strom vorgesehenen Stromwerten entspricht.

Aus Sicherheitsgründen ist es ferner zweckmäßig, wenn der Prozessor mit der Kontaktsteuerschaltung bei Überschreiten eines vorgegebenen Maximalstroms des bestromten Kontaktanschlusses dessen Bestromung abschaltet, so dass Schäden sowohl in der Steckdosensteuereinheit als auch bei den angeschlossenen Verbrauchern vermieden werden können.

Ferner ist vorzugsweise vorgesehen, dass der Prozessor beim Abschalten eines bestromten Kontaktanschlusses ein Fehlersignal am Bus-Anschluss ausgibt.

Eine weitere vorteilhafte Lösung sieht vor, dass der Prozessor der Steckdosensteuereinheit ein bei dieser ankommendes BUS-Signal für eine Schwenksteuereinheit auf einen an der Steckdosensteuereinheit vorgesehenen BUS-Anschluss für die Schwenksteuereinheit weiterleitet.

Damit besteht die Möglichkeit, die Steckdosensteuereinheit direkt an den Fahrzeugbus, beispielsweise einen Can-BUS, anzuschließen, jedoch die Kommunikation mit der Schwenksteuereinheit über die Steckdosensteuereinheit zu führen, so dass der Fahrzeug-Can-BUS des Fahrzeugs nur mit der Steckdosensteuereinheit kommunizieren muss.

Vorzugsweise ist dabei vorgesehen, dass der BUS-Anschluss für die Schwenksteuereinheit ein Anschluss eines Lin-BUS ist, der eine vereinfachte Kommunikation zwischen der Steckdosensteuereinheit und der Schwenksteuereinheit erlaubt.

Eine weitere vorteilhafte Lösung sieht vor, dass der Prozessor der Steckdosensteuereinheit ein an seinem BUS-Anschluss für die Schwenksteuereinheit ankommendes BUS-Signal der Schwenksteuereinheit an den BUS-Anschluss für das BUS-System des Fahrzeugs weitergibt.

Hinsichtlich der Anordnung der Steckdosensteuereinheit im Zusammenhang mit der Anhängekupplung wurden bislang keine weiteren Angaben gemacht.

So sieht eine vorteilhafte Lösung vor, dass die Steckdosensteuereinheit in dem Gesamtgehäuse der Schwenkeinheit angeordnet ist, das heißt, dass die Steckdosensteuereinheit nicht nur Teil der Anhängekupplung ist, sondern in dem Gesamtgehäuse der Schwenkeinheit integriert ist.

Dabei kann die Integration der Steckdosensteuereinheit in unterschiedlichen Bereichen erfolgen.

Eine vorteilhafte Lösung sieht vor, dass die Steckdosensteuereinheit in dem Schwenkbetriebsgehäuseabschnitt angeordnet ist.

Eine andere vorteilhafte Lösung sieht vor, dass die Steckdosensteuereinheit in dem Motorgehäuseabschnitt der Schwenkeinheit angeordnet ist.

Es ist aber auch möglich, Teile der Steckdosensteuereinheit in dem Schwenkbetriebsgehäuseabschnitt anzuordnen und Teile der Steckdosensteuereinheit in dem Motorgehäuseabschnitt anzuordnen, um eine optimale Raumausnutzung zu erhalten.

Eine weitere vorteilhafte Lösung sieht vor, dass der Kugelhals eine Aufnahme aufweist, in welcher die Steckdosensteuereinheit für die am Kugelhals gehaltene Steckdose angeordnet ist.

Das heißt, dass bei dieser Lösung zumindest ein Teil der Steckdosensteuereinheit oder die gesamte Steckdosensteuereinheit am Kugelhals gehalten ist.

Hinsichtlich der Ausbildung der Aufnahme für die Steckdosensteuereinheit am Kugelhals wurden bislang keine näheren Angaben gemacht.

So sieht eine vorteilhafte Lösung vor, dass die Aufnahme als Vertiefung in dem Kugelhals ausgebildet ist.

Dabei ist die Vertiefung beispielsweise so angeordnet, dass sie zwischen einer oberen und einer unteren Längsstrebe einer Tragstruktur des Kugelhalses angeordnet ist.

Ferner ist zweckmäßigerweise vorgesehen, dass die Vertiefung zwischen einem ersten fahrzeugfest fixierbaren Ende und der am Kugelhals angeordneten Steckdose angeordnet ist, so dass dadurch die Steckdosensteuereinheit in geeigneter Weise nahe zur Steckdose platziert werden kann.

Prinzipiell könnte die Steckdose auf den Kugelhals aufgesetzt sein.

Eine besonders günstige Lösung sieht jedoch vor, dass die Steckdose in einer von der Tragstruktur des Kugelhalses gebildeten Steckdosenaufnahme angeordnet ist.

Darüber hinaus ist zum Schutz der Steckdosensteuerschaltung zweckmäßigerweise noch vorgesehen, dass die Steckdosensteuerschaltung durch eine Abdeckung des Kugelhalses überdeckt ist.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung, umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine fahrzeugfest angeordnete Schwenkeinheit (S), mittels welcher der Schwenklagerkörper (14) zur Ausführung einer Schwenkbewegung um eine Schwenkachse (22) zwischen einer Arbeitsstellung (A) und einer Ruhestellung (R) verschwenkbar ist, wobei die Schwenkeinheit (S) eine fahrzeugfeste Schwenklagereinheit (20) und eine Drehblockiereinrichtung (50) zum Blockieren einer Schwenkbewegung des Schwenklagerkörpers (14) um die Schwenkachse (22) zumindest in der Arbeitsstellung (A) umfasst, wobei in der Schwenkeinheit (S) eine Schwenksteuereinheit (380) integriert ist.
2. Anhängekupplung nach Ausführungsform 1, wobei die Schwenkeinheit (S) ein Gesamtgehäuse (400) aufweist, in welchem die Schwenklagereinheit (20), die Drehblockiereinrichtung (50) und ein Antriebsmotor (180) angeordnet sind und wobei die Schwenksteuereinheit (380) in dem Gesamtgehäuse (400) angeordnet ist.
3. Anhängekupplung nach einer der voranstehenden Ausführungsformen, wobei die Schwenksteuereinheit (380) die Schwenkbewegungen des Kugelhalses (10) um die Schwenkachse (22) mittels eines Schwenkbewegungssensors (372) erfasst.
4. Anhängekupplung nach Ausführungsform 3, wobei der Schwenkbewegungssensor (372) Schwenkbewegungen des Schwenklagerkörpers (14) um die Schwenkachse (22) erfasst.
5. Anhängekupplung nach Ausführungsform 4, wobei der Schwenklagerkörper (14) über ein Kopplungselement (100) mit dem Schwenkbewegungssensor (372) zusammenwirkt.
6. Anhängekupplung nach einer der Ausführungsformen 3 bis 5, wobei der Schwenkbewegungssensor (372) auf einem Sensorträger (360) angeordnet ist.
7. Anhängekupplung nach einer der voranstehenden Ausführungsformen, dadurch gekennzeichnet, das die Schwenksteuereinheit (380) Funktionen der Drehblockiereinrichtung (50) mittels eines Funktionssensors (362) erfasst.
8. Anhängekupplung nach Ausführungsform 7, wobei die Schwenksteuereinheit (380) mittels des Funktionssensors (362) mindestens eine Stellung der Drehblockiereinrichtung (50) erfasst.
9. Anhängekupplung nach Ausführungsform 8, wobei die Schwenksteuereinheit (380) die Stellung der Drehblockiereinrichtung (50) durch Abtasten eines Elements (52) derselben mittels des Funktionssensors (362) erfasst.
10. Anhängekupplung nach einer der Ausführungsformen 7 bis 9, wobei der Funktionssensor (362) auf einem Sensorträger (360) angeordnet ist.
11. Anhängekupplung nach einer der voranstehenden Ausführungsformen, wobei die Schwenksteuereinheit (380) eine Drehzahl des Antriebsmotors (180) mittels eines Drehzahlsensors (364) erfasst.
12. Anhängekupplung nach Ausführungsform 11, wobei der Drehzahlsensor (364) einer Abtriebswelle (182) des Antriebsmotors (180) zugeordnet ist.
13. Anhängekupplung nach Ausführungsform 11 oder 12, wobei der Drehzahlsensor (364) auf einem Sensorträger (360) angeordnet ist.
14. Anhängekupplung nach einer der voranstehenden Ausführungsformen, wobei die Schwenksteuereinheit (380) eine Temperatur in der Schwenkeinheit (S) mittels eines Temperatursensors (368) erfasst.
15. Anhängekupplung nach Ausführungsform 14, wobei der Temperatursensor (368) auf einem Sensorträger (360) angeordnet ist.
16. Anhängekupplung nach einer der voranstehenden Ausführungsformen, wobei die Sensorträger (360) mit Steckkontaktelementen (396) versehen sind.
17. Anhängekupplung nach einer der voranstehenden Ausführungsformen, wobei das Gesamtgehäuse (400) einen die Schwenklagereinheit (20), die Drehblockiereinheit (50) sowie mindestens eine Getriebeeinheit (130, 170) aufnehmenden Schwenkbetriebsgehäuseabschnitt (402) aufweist und wobei die Sensorträger (360) dem Schwenkbetriebsgehäuseabschnitt (402) zugeordnet sind.
18. Anhängekupplung nach Ausführungsform 17, wobei die Sensorträger (360) in dem Schwenkbetriebsgehäuseabschnitt (402) angeordnet sind.
19. Anhängekupplung nach Ausführungsform 17 oder 18, wobei die Getriebeeinheit ein Verteilgetriebe (130) aufweist, welches abtriebsseitig einerseits den Schwenklagerkörper (14) und andererseits die Drehblockiereinrichtung (50) antreibt und wobei insbesondere mindestens einer der Sensorträger (360) antriebsseitig des Verteilgetriebes (130) angeordnet ist.
20. Anhängekupplung nach Ausführungsform 19, wobei das Verteilgetriebe (130) durch ein Untersetzungsgetriebe (170) angetrieben ist und wobei mindestens einer der Sensorträger (360) dem Untersetzungsgetriebe (170) zugeordnet ist.
21. Anhängekupplung nach Ausführungsform 20, wobei das Untersetzungsgetriebe (170) ein antriebsseitiges Getriebeelement (184) und ein abtriebsseitiges Getriebeelement (172) aufweist und wobei mindestens einer der Sensorträger (360) zwischen dem antriebsseitigen Getriebeelement (184) und dem abtriebsseitigen Getriebeelement (172) angeordnet ist.
22. Anhängekupplung nach einer der voranstehenden Ausführungsformen, wobei der Schwenkbewegungssensor (372), der Funktionssensor (362) und der Drehzahlsensor (364) auf einem gemeinsamen Sensorträger (360) angeordnet sind.
23. Anhängekupplung nach einer der voranstehenden Ausführungsformen, wobei das Gesamtgehäuse (400) einen die Schwenklagereinheit (20), und mindestens eine Getriebeeinheit (130, 170) aufnehmenden Schwenkbetriebsgehäuseabschnitt (402) aufweist und wobei die Schwenksteuereinheit (380) dem Schwenkbetriebsgehäuseabschnitt (402) zugeordnet ist.
24. Anhängekupplung nach Ausführungsform 23, wobei die Schwenksteuereinheit (380) in dem Schwenkbetriebsgehäuseabschnitt (402) angeordnet ist.
25. Anhängekupplung nach Ausführungsform 23 oder 24, wobei die Getriebeeinheit ein Verteilgetriebe (130) aufweist, welches abtriebsseitig einerseits den Schwenklagerkörper (14) und andererseits die Drehblockiereinrichtung (50) antreibt und wobei die Schwenksteuereinheit (380) antriebsseitig des Verteilgetriebes (130) angeordnet ist.
26. Anhängekupplung nach Ausführungsform 25, wobei das Verteilgetriebe (130) durch ein Untersetzungsgetriebe (170) angetrieben ist und wobei die Schwenksteuereinheit (380) dem Untersetzungsgetriebe (170) zugeordnet ist.
27. Anhängekupplung nach Ausführungsform 26, wobei das Untersetzungsgetriebe (170) ein antriebsseitiges Getriebeelement (184) und ein abtriebsseitiges Getriebeelement (172) aufweist und wobei die Schwenksteuereinheit (380) zwischen dem antriebsseitigen Getriebeelement (184) und dem abtriebsseitigen Getriebeelement (172) angeordnet ist.
28. Anhängekupplung nach einer der voranstehenden Ausführungsformen, wobei das Gesamtgehäuse (400) einen den Antriebsmotor (180) aufweisenden Motorgehäuseabschnitt (408) aufweist und wobei die Schwenksteuereinheit (380) dem Motorgehäuseabschnitt (408) zugeordnet ist.
29. Anhängekupplung nach Ausführungsform 28, wobei die Schwenksteuereinheit (380) in dem Motorgehäuseabschnitt (408) angeordnet ist.
30. Anhängekupplung nach einer der voranstehenden Ausführungsformen, wobei die Schwenkeinheit (S) ein Gesamtgehäuse (400) aufweist, in welchem die Schwenklagereinheit (20) und ein Antriebsmotor (180) angeordnet sind und wobei eine auf einer Schaltungsplatine (382) angeordnete Steuerschaltung (384) der Schwenksteuereinheit (380) in dem Gesamtgehäuse (400) angeordnet ist.
31. Anhängekupplung nach einer der voranstehenden Ausführungsformen, wobei das Gesamtgehäuse (400) einen die Schwenklagereinheit (20) sowie mindestens eine Getriebeeinheit (130, 170) aufnehmenden Schwenkbetriebsgehäuseabschnitt (402) aufweist und wobei die auf einer Schaltungsplatine (382) angeordnete Steuerschaltung (384) der Schwenksteuereinheit (380) dem Schwenkbetriebsgehäuseabschnitt (402) zugeordnet ist.
32. Anhängekupplung nach Ausführungsform 31, wobei die auf einer Schaltungsplatine (382) angeordnete Steuerschaltung (384) der Schwenksteuereinheit (380) in dem Schwenkbetriebsgehäuseabschnitt (402) angeordnet ist.
33. Anhängekupplung nach einer der Ausführungsformen 30 bis 32, wobei die Getriebeeinheit ein Verteilgetriebe (130) aufweist, welches abtriebsseitig einerseits den Schwenklagerkörper (14) und andererseits die Drehblockiereinrichtung (50) antreibt und wobei die auf einer Schaltungsplatine (382) angeordnete Steuerschaltung (384) der Schwenksteuereinheit (380) antriebsseitig des Verteilgetriebes (130) angeordnet ist.
34. Anhängekupplung nach Ausführungsform 33, wobei das Verteilgetriebe (130) durch ein Untersetzungsgetriebe (170) angetrieben ist und wobei die auf einer Schaltungsplatine (382) angeordnete Steuerschaltung (384) der Schwenksteuereinheit (380) dem Untersetzungsgetriebe (170) zugeordnet ist.
35. Anhängekupplung nach Ausführungsform 34, wobei das Untersetzungsgetriebe (170) ein antriebsseitiges Getriebeelement (184) und ein abtriebsseitiges Getriebeelement (172) aufweist und wobei die auf einer Schaltungsplatine (382) angeordnete Steuerschaltung (384) der Schwenksteuereinheit (380) zwischen dem antriebsseitigen Getriebeelement (184) und dem abtriebsseitigen Getriebeelement (172) angeordnet ist.
36. Anhängekupplung nach einer der voranstehenden Ausführungsformen, wobei das Gesamtgehäuse einen den Antriebsmotor (180) aufweisenden Motorgehäuseabschnitt (408) aufweist und wobei die auf einer Schaltungsplatine (382) angeordnete Steuerschaltung (384) der Schwenksteuereinheit (380) dem Motorgehäuseabschnitt (408) zugeordnet ist.
37. Anhängekupplung nach Ausführungsform 36, wobei die auf einer Schaltungsplatine (382) angeordnete Steuerschaltung (384) der Schwenksteuereinheit (380) in dem Motorgehäuseabschnitt (408) angeordnet ist.
38. Anhängekupplung nach einer der voranstehenden Ausführungsformen, wobei die Schwenksteuereinheit (380) eine Steuerschaltung (384) aufweist, welche mittels einer Datenverarbeitungseinheit (386) einerseits mit einem fahrzeugseitigen BUS-System kommuniziert und andererseits die Schwenkeinheit (S) gemäß einem vorgegebenen Programmcode steuert.
39. Anhängekupplung nach einer der voranstehenden Ausführungsformen, wobei die Schwenksteuereinheit (380) eine Steuerschaltung (384) aufweist, welche mittels einer Datenverarbeitungseinheit (386) und einer Motorantriebsschaltung (388) für den Antriebsmotor (180) den Antriebsmotor (180) zum Verschwenken des Kugelhalses zwischen der Arbeitsstellung (A) und der Ruhestellung (R) steuert.
40. Anhängekupplung nach einer der voranstehenden Ausführungsformen, wobei die Datenverarbeitungseinheit (386) mittels des Schwenkbewegungssensors (372) erfasst, ob der Kugelhals (10) in der Arbeitsstellung (A) oder der Ruhestellung (R) steht.
41. Anhängekupplung nach Ausführungsform 40, wobei die Datenverarbeitungseinheit (386) mittels des Schwenkbewegungssensors (372) Zwischenstellungen des Kugelhalses (10) zwischen der Arbeitsstellung (A) und der Ruhestellung (R) des Kugelhalses (10) erfasst.
42. Anhängekupplung nach einer der voranstehenden Ausführungsformen, wobei die Datenverarbeitungseinheit (386) mittels des Funktionssensors (362) erfasst, ob die Drehblockiereinrichtung (50) in einer Drehblockierstellung oder einer Lösestellung steht.
43. Anhängekupplung nach einer der voranstehenden Ausführungsformen, wobei die Datenverarbeitungseinheit (386) nach einem Start des Antriebsmotors (180) einen Wert des Drehzahlsensors (364) und einen Wert des Schwenkbewegungssensors (372) miteinander vergleicht.
44. Anhängekupplung nach einer der voranstehenden Ausführungsformen, wobei die Datenverarbeitungseinheit (386) aufgrund eines dieser über einen BUS-Anschluss (B) übermittelten Startsignals den Antriebsmotor (180) startet.
45. Anhängekupplung nach Ausführungsform 44, wobei die Datenverarbeitungseinheit (386) aufgrund des Startsignals den Antriebsmotor (180) nur dann startet, wenn der Kugelhals (10) in der Ruhestellung (R) oder der Arbeitsstellung (A) steht.
46. Anhängekupplung nach einer der voranstehenden Ausführungsformen, wobei die Datenverarbeitungseinheit (386) während des Betriebs des Antriebsmotors (180) die Schwenkbewegung des Kugelhalses (10) mittels des Schwenkbewegungssensors (372) überwacht.
47. Anhängekupplung nach Ausführungsform 46, wobei die Datenverarbeitungseinheit (386) mittels des Schwenkbewegungssensors (372) das Erreichen der Arbeitsstellung (A) oder der Ruhestellung (R) erkennt.
48. Anhängekupplung nach einer der voranstehenden Ausführungsformen, wobei die Datenverarbeitungseinheit (386) die Stromaufnahme des Antriebsmotors (180) mittels der Motorantriebsschaltung (388) überwacht und den Antriebsmotor (180) bei Überschreiten einer vorgegebenen Stromschwelle stoppt.
49. Anhängekupplung nach einer der voranstehenden Ausführungsformen, wobei die Datenverarbeitungseinheit (386) dann, wenn diese mittels des Schwenkbewegungssensors (372) erfasst, dass die Arbeitsstellung (A) oder die Ruhestellung (R) des Kugelhalses (10) erreicht ist und/oder die Stromaufnahme des Antriebsmotors (180) die vorgegebene Stromschwelle überschreitet, ein Gut-Signal erzeugt und am BUS-Anschluss (B) ausgibt.
50. Anhängekupplung nach einer der voranstehenden Ausführungsformen, wobei die Datenverarbeitungseinheit (386) dann, wenn die Stromaufnahme des Antriebsmotors (180) die vorgegebene Stromschwelle außerhalb der Arbeitsstellung (A) oder der Ruhestellung (R) des Kugelhalses überschreitet, ein Schlecht-Signal erzeugt und am BUS-Anschluss (B) ausgibt.
51. Anhängekupplung nach einer der voranstehenden Ausführungsformen, wobei die Datenverarbeitungseinheit (386) den Wert des Drehzahlsensors (364) und den Wert des Schwenkbewegungssensors (372) zumindest während einer für ein Lösen von Sicherungseinrichtungen erforderlichen Phase vergleicht und dann, wenn der Wert des Schwenkbewegungssensors (372) nicht nach dieser zeitlich vorgegebenen Phase zunimmt, ein Schlecht-Signal am BUS-Anschluss (B) ausgibt.
52. Anhängekupplung nach einer der voranstehenden Ausführungsformen, wobei die Datenverarbeitungseinheit (386) mit dem Funktionssensor (362) einen Zustand der Drehblockiereinrichtung (50) erfasst und in der Arbeitsstellung (A) bei vorliegender Drehblockierstellung ein Gut-Signal am BUS-Anschluss (B) ausgibt und in der Arbeitsstellung (A) bei nicht vorliegender Drehblockierstellung ein Schlecht-Signal am BUS-Anschluss (B) ausgibt.
53. Anhängekupplung nach dem Oberbegriff der Ausführungsform 1 oder nach einer der voranstehenden Ausführungsformen, wobei die Anhängekupplung am Kugelhals (10) eine Steckdose (34) aufweist und mit einer Steckdosensteuereinheit (420) versehen ist, welche Kontaktanschlüsse (422) zum Bestromen von Kontakten (424, 426) der Steckdose (34) aufweist, und wobei die Steckdosensteuereinheit (420) zur Stromversorgung zwei Versorgungsanschlüsse (+, -) und zur Ansteuerung einen BUS-Anschluss (B) aufweist.
54. Anhängekupplung nach Ausführungsform 53, wobei die Steckdosensteuereinheit (420) eine Steckdosensteuerschaltung (432) mit einem Prozessor (436) und einer Kontaktsteuerschaltung (438) aufweist.
55. Anhängekupplung nach Ausführungsform 54, wobei der Prozessor (436) zusammen mit der Kontaktsteuerschaltung (438) die Kontaktanschlüsse (422) überwacht.
56. Anhängekupplung nach Ausführungsform 55, wobei der Prozessor (436) mittels der Kontaktsteuerschaltung (438) die Kontaktanschlüsse (422) bei Nichtbestromung im Hinblick auf deren Widerstand gegen Masse überwacht.
57. Anhängekupplung nach Ausführungsform 56, wobei der Prozessor (436) bei Abweichungen der Kontaktanschlüsse (422) von einem vorgegebenen Widerstand gegen Masse ein Fehlersignal an den BUS-Anschluss ausgibt.
58. Anhängekupplung nach einer der Ausführungsformen 54 bis 57, wobei der Prozessor (436) mit der Kontaktsteuerschaltung (438) die Kontaktanschlüsse (422) bei Bestromung im Hinblick auf den fließenden Strom überwacht.
59. Anhängekupplung nach Ausführungsform 58, wobei der Prozessor (436) mit der Kontaktsteuerschaltung (438) bei Überschreiten eines vorgegebenen Maximalstroms des bestromten Kontaktanschlusses (422) dessen Bestromung abschaltet.
60. Anhängekupplung nach Ausführungsform 59, wobei der Prozessor (436) bei Abschalten eines bestromten Kontaktanschlusses (422) ein Fehlersignal am BUS-Anschluss ausgibt.
61. Anhängekupplung nach einer der voranstehenden Ausführungsformen, wobei ein Prozessor (446) der Steckdosensteuereinheit (420) ein bei dieser ankommendes BUS-Signal für eine Schwenksteuereinheit (380) auf einen an der Steckdosensteuereinheit (420) vorgesehenen BUS-Anschluss (444) für die Schwenksteuereinheit (380) weiterleitet.
62. Anhängekupplung nach Ausführungsform 61, wobei der BUS-Anschluss für die Schwenksteuereinheit (380) ein Anschluss eines Lin-BUS ist.
63. Anhängekupplung nach Ausführungsform 61 oder 62, wobei der Prozessor (446) der Steckdosensteuereinheit (420) ein an seinem BUS-Anschluss (444) für die Schwenksteuereinheit (380) ankommendes BUS-Signal der Schwenksteuereinheit (380) an den BUS-Anschluss für das BUS-System des Fahrzeugs weitergibt.
64. Anhängekupplung nach einer der Ausführungsformen 53 bis 63, wobei die Steckdosensteuereinheit (420) in dem Gesamtgehäuse (400) der Schwenkeinheit S angeordnet ist.
65. Anhängekupplung nach Ausführungsform 64, wobei die Steckdosensteuereinheit (420) in dem Schwenkbetriebsgehäuseabschnitt (402) der Schwenkeinheit (S) angeordnet ist.
66. Anhängekupplung nach Ausführungsform 64 oder 65, wobei die Steckdosensteuereinheit (420) in dem Motorgehäuseabschnitt (408) der Schwenkeinheit (S) angeordnet ist.
67. Anhängekupplung nach einer der Ausführungsformen 53 bis 66, wobei der Kugelhals (10) eine Aufnahme (452) aufweist, in welcher die Steckdosensteuereinheit (420) für die am Kugelhals (10) gehaltene Steckdose (34) angeordnet ist.
68. Anhängekupplung nach Ausführungsform 67, wobei die Aufnahme (452) als Vertiefung in dem Kugelhals (10) ausgebildet ist.
69. Anhängekupplung nach Ausführungsform 68, wobei die Vertiefung (452) zwischen einer oberen (462) und einer unteren Längsstrebe (464) einer Tragstruktur (466) des Kugelhalses (10) angeordnet ist.
70. Anhängekupplung nach einer der Ausführungsformen 67 bis 69, wobei die Vertiefung (452) zwischen einem ersten fahrzeugfest fixierbaren Ende (12) und der am Kugelhals (10) angeordneten Steckdose (34) angeordnet ist.
71. Anhängekupplung nach einer der Ausführungsformen 53 bis 70, wobei die Steckdose (34) in einer von der Tragstruktur (466) des Kugelhalses (10) gebildeten Steckdosenaufnahme (468) angeordnet ist.
72. Anhängekupplung nach einer der Ausführungsformen 53 bis 71, wobei die Steckdosensteuerschaltung (420) durch eine Abdeckung (454) des Kugelhalses (10) überdeckt ist.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Rückansicht eines Kraftfahrzeugs mit einer erfindungsgemäßen Anhängekupplung;
- Fig. 2: eine perspektivische Ansicht eines ersten Ausführungsbeispiels einer erfindungsgemäßen Anhängekupplung mit Blick ungefähr in Fahrtrichtung auf die Anhängekupplung wie sie am Fahrzeugheck zu montieren ist, wobei die Anhängekupplung in ihrer Arbeitsstellung steht;
- Fig. 3: eine perspektivische Ansicht der Anhängekupplung in Fig. 2 entgegengesetzt zur Fahrtrichtung und in Arbeitsstellung;
- Fig. 4: eine Ansicht entsprechend Fig. 2 der in der Ruhestellung stehenden Anhängekupplung;
- Fig. 5: eine Ansicht der Anhängekupplung entsprechend Fig. 3 in der Ruhestellung;
- Fig. 6: eine Darstellung eines Schnitts längs Linie 6-6 in Fig. 3 in der Arbeitsstellung;
- Fig. 7: eine Darstellung eines Schnitts ähnlich Fig. 6 in der Ruhestellung;
- Fig. 8: einen Schnitt längs Linie 8-8 in Fig. 7 in der Arbeitsstellung;
- Fig. 9: eine Darstellung eines Schnitts ähnlich Fig. 8 in der Losestellung mit maximal verdrehtem Betätigungskörper;
- Fig. 10: eine Darstellung ähnlich Fig. 9 bei geringfügigem Schwenken des Schwenklagerkörpers aus der Arbeitsstellung heraus, mit maximal verdrehtem Betätigungskörper;
- Fig. 11: eine perspektivische Darstellung eines Hohlrads und einer mit diesem zusammenwirkenden Antriebshülse;
- Fig. 12: einen Schnitt längs Linie 12-12 in Fig. 6 mit Blick auf ein das Hohlrad umfassendes Verteilgetriebe ohne Tragplatte und Haltering;
- Fig. 13: eine perspektivische Darstellung des Verteilgetriebes mit einem vorgeschalteten Untersetzungsgetriebe;
- Fig. 14: eine perspektivische Explosionsdarstellung des Verteilgetriebes und des Untersetzungsgetriebes;
- Fig. 15: eine perspektivische Explosionsdarstellung des Schwenklagerkörpers mit Abdeckung;
- Fig. 16: einen vergrößerten Schnitt gemäß Fig. 6 in der Arbeitsstellung;
- Fig. 17: einen vergrößerten Schnitt ähnlich Fig. 6 in der Ruhestellung;
- Fig. 18: in der Ausgangsstellung;
Fig. 18a eine Draufsicht auf das Hohlrad des Verteilgetriebes von Seiten der Antriebshülse;
Fig. 18b eine perspektivische Darstellung des Zusammenwirkens des Hohlrades in der Stellung gemäß Fig. 18a mit der Deaktivierungseinheit für die Ruhestellungsrasteinrichtung und mit der Drehblockiereinrichtung;
Fig. 18c eine perspektivische Darstellung des Zusammenwirkens des Hohlrades in der Stellung gemäß Fig. 18a mit einer Sicherungs-einrichtung und mit der Drehblockiereinrichtung;
- Fig. 19: in der ersten gegenüber der Ausgangsstellung gedrehten Stellung des Hohlrads zum Lösen der Sicherungseinrichtung und ohne Einwirkung auf die Drehblockiereinrichtung;
Fig. 19a eine Draufsicht auf das Hohlrad des Verteilgetriebes von Seiten der Antriebshülse;
Fig. 19b eine perspektivische Darstellung des Zusammenwirkens des Hohlrades in der Stellung gemäß Fig. 19a mit der Deaktivierungseinheit für die Ruhestellungsrasteinrichtung und mit der Drehblockiereinrichtung;
Fig. 19c eine perspektivische Darstellung des Zusammenwirkens des Hohlrades in der Stellung gemäß Fig. 19a mit einer Sicherungs-einrichtung und mit der Drehblockiereinrichtung;
- Fig. 20: in einer maximal gegenüber der Ausgangsstellung gedrehten Stellung des Hohlrads ohne Einwirkung auf die Drehblockier-einrichtung;
Fig. 20a eine Draufsicht auf das Hohlrad des Verteilgetriebes von Seiten der Antriebshülse;
Fig. 20b eine perspektivische Darstellung des Zusammenwirkens des Hohlrades in der Stellung gemäß Fig. 20a mit der Deaktivierungseinheit für die Ruhestellungsrasteinrichtung und mit der Drehblockiereinrichtung;
Fig. 20c eine perspektivische Darstellung des Zusammenwirkens des Hohlrades in der Stellung gemäß Fig. 20a mit einer Sicherungs-einrichtung und mit der Drehblockiereinrichtung;
- Fig. 21: in einer gegenüber der Ausgangsstellung gedrehten Stellung des Hohlrades bei Erreichen der Lösestellung der Drehblockiereinrichtung;
Fig. 21a eine Draufsicht auf das Hohlrad des Verteilgetriebes von Seiten der Antriebshülse;
Fig. 21b eine perspektivische Darstellung des Zusammenwirkens des Hohlrades in der Stellung gemäß Fig. 21a mit der Deaktivierungseinheit für die Ruhestellungsrasteinrichtung und mit der Drehblockiereinrichtung;
Fig. 21c eine perspektivische Darstellung des Zusammenwirkens des Hohlrades in der Stellung gemäß Fig. 21a mit einer Sicherungs-einrichtung und mit der Drehblockiereinrichtung;
- Fig. 22: in einer gegenüber der Ausgangsstellung gedrehten Stellung des Hohlrades bei Erreichen der Ruhestellung des Schwenklagerkörpers;
Fig. 22a eine Draufsicht auf das Hohlrad des Verteilgetriebes von Seiten der Antriebshülse;
Fig. 22b eine perspektivische Darstellung des Zusammenwirkens des Hohlrades in der Stellung gemäß Fig. 22a mit der Deaktivierungseinheit für die Ruhestellungsrasteinrichtung und mit der Drehblockiereinrichtung;
Fig. 22c eine perspektivische Darstellung des Zusammenwirkens des Hohlrades in der Stellung gemäß Fig. 22a mit einer Sicherungs-einrichtung und mit der Drehblockiereinrichtung;
- Fig. 23: in einer gegenüber der Ausgangsstellung gedrehten Stellung des Hohlrads und Deaktivieren der Ruhestellungsrasteinrichtung;
Fig. 23a eine Draufsicht auf das Hohlrad des Verteilgetriebes von Seiten der Antriebshülse;
Fig. 23b eine perspektivische Darstellung des Zusammenwirkens des Hohlrades in der Stellung gemäß Fig. 23a mit der Deaktivierungseinheit für die Ruhestellungsrasteinrichtung und mit der Drehblockiereinrichtung;
Fig. 23c eine perspektivische Darstellung des Zusammenwirkens des Hohlrades in der Stellung gemäß Fig. 23a mit einer Sicherungs-einrichtung und mit der Drehblockiereinrichtung;
- Fig. 24: in einer gegenüber der Ausgangsstellung gemäß Fig. 18 gedrehten Stellung des Hohlrads bei einem Übergang der Drehblockier-einrichtung in die Drehblockierstellung;
Fig. 24a eine Draufsicht auf das Hohlrad des Verteilgetriebes von Seiten der Antriebshülse;
Fig. 24b eine perspektivische Darstellung des Zusammenwirkens des Hohlrades in der Stellung gemäß Fig. 24a mit der Deaktivierungseinheit für die Ruhestellungsrasteinrichtung und mit der Drehblockiereinrichtung und
Fig. 24c eine perspektivische Darstellung des Zusammenwirkens des Hohlrades in der Stellung gemäß Fig. 24a mit einer Sicherungs-einrichtung und mit der Drehblockiereinrichtung
- Fig. 25: eine perspektivische Darstellung eines antriebsseitigen Teils des Untersetzungsgetriebes mit einem Sensoren tragenden Sensorträger;
- Fig. 26: eine perspektivische Darstellung im Teilschnitt des Sensorträgers mit den Sensoren und deren Betätigung;

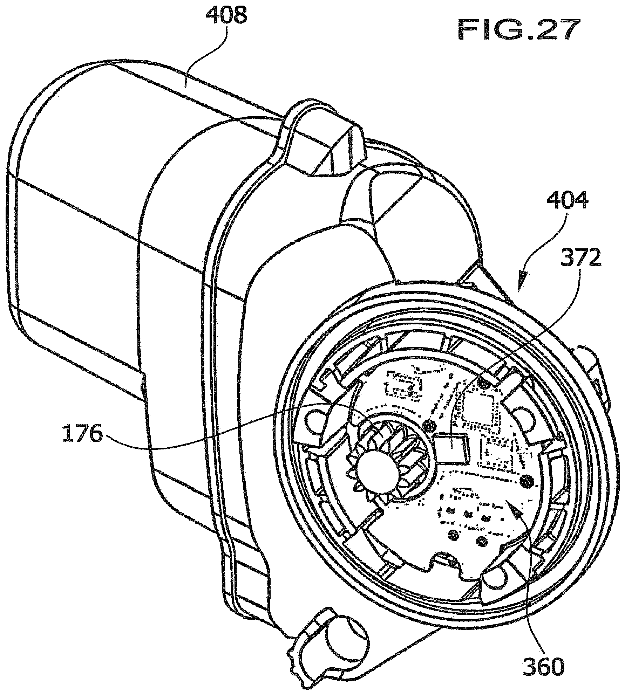

- Fig. 27: eine perspektivische Darstellung eines Trägerkörpers und eines von diesem gehaltenen Motorgehäuseabschnitts;
- Fig. 28: eine weitere perspektivische Darstellung des Trägerkörpers bei abgenommenem Motorgehäuseabschnitt;

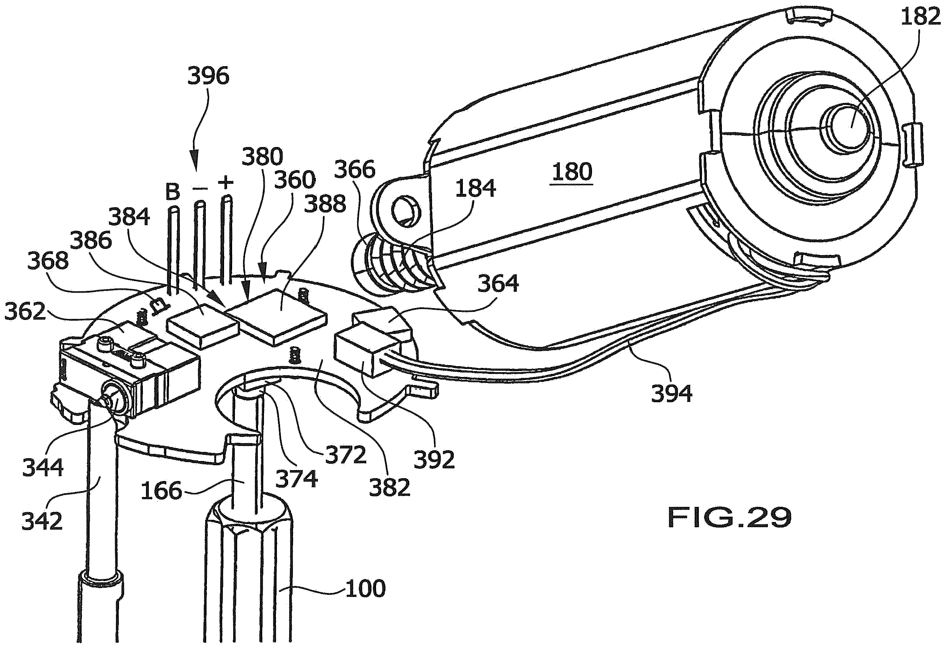

- Fig. 29: eine perspektivische Darstellung des Sensorträgers mit auf diesem ebenfalls angeordneter Steuerschaltung;
- Fig. 30: eine schematische Darstellung der Funktionen der Steuerschaltung;
- Fig. 31: eine perspektivische Darstellung ähnlich Fig. 25 eines zweiten Ausführungsbeispiels;
- Fig. 32: eine perspektivische Darstellung ähnlich Fig. 25 eines dritten Ausführungsbeispiels;
- Fig. 33: eine schematische Darstellung eines ersten Ausführungsform einer Steckdosensteuereinheit;
- Fig. 34: eine Darstellung einer zweiten Ausführungsform der erfindungsgemäßen Steckdosensteuereinheit und
- Fig. 35: eine Darstellung des Kugelhalses mit der an diesem vorgesehenen zweiten Ausführungsform der erfindungsgemäßen Steckdosen-steuereinheit.

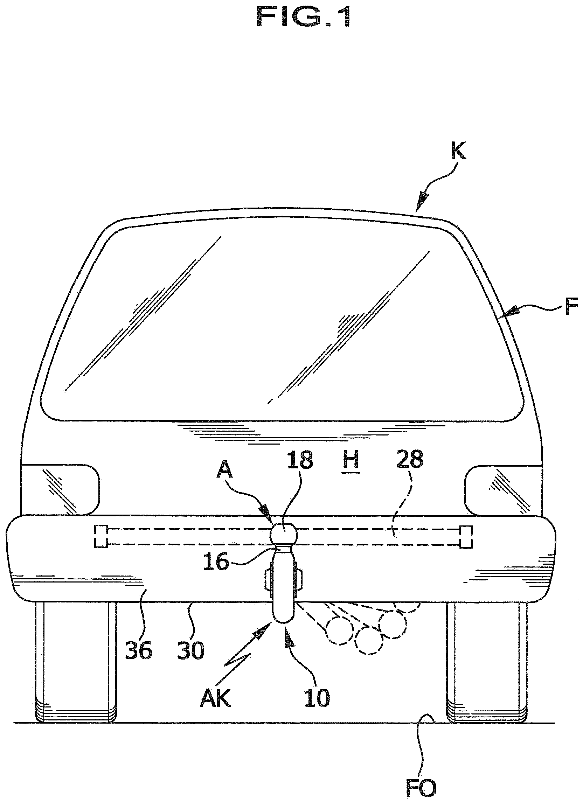

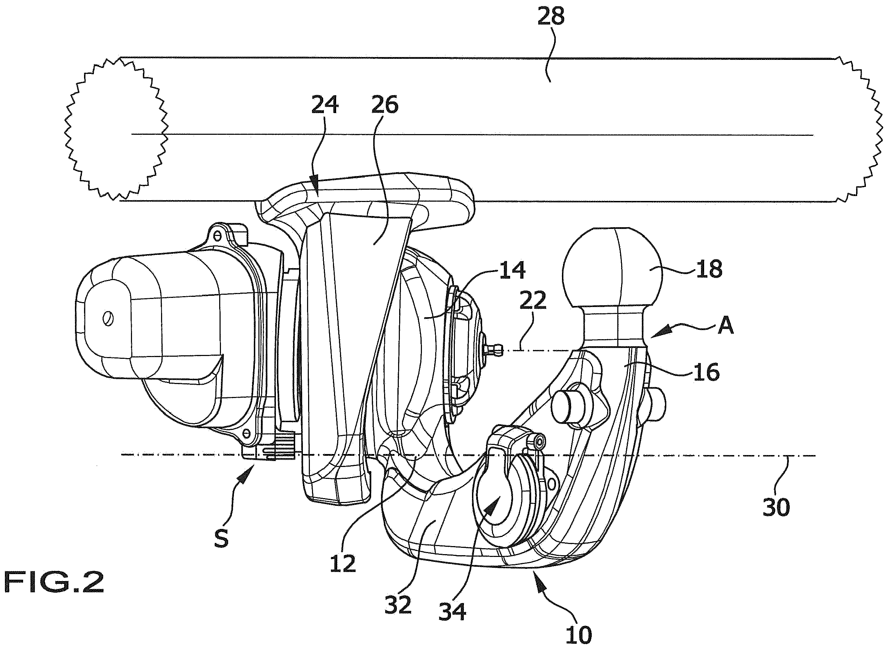

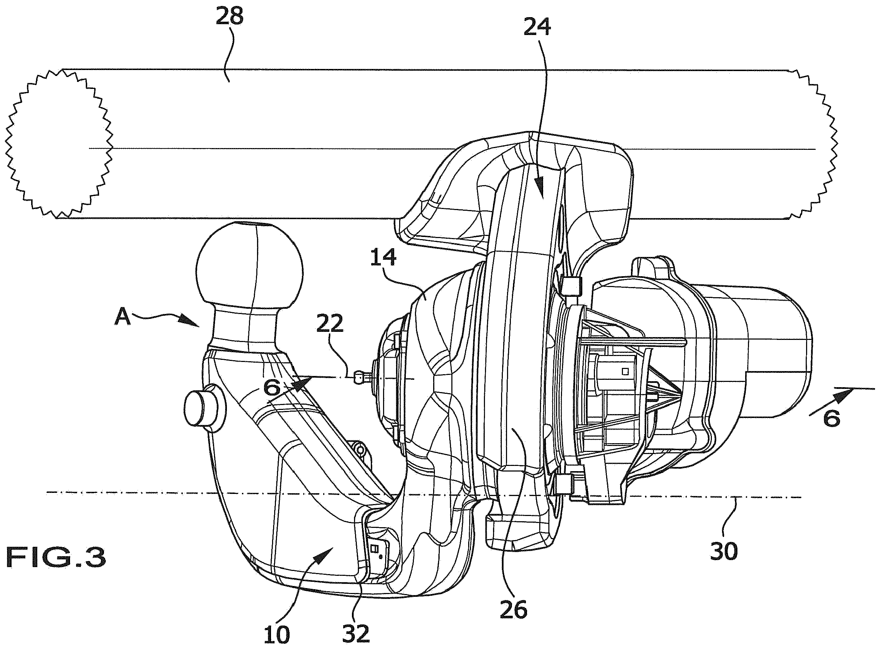

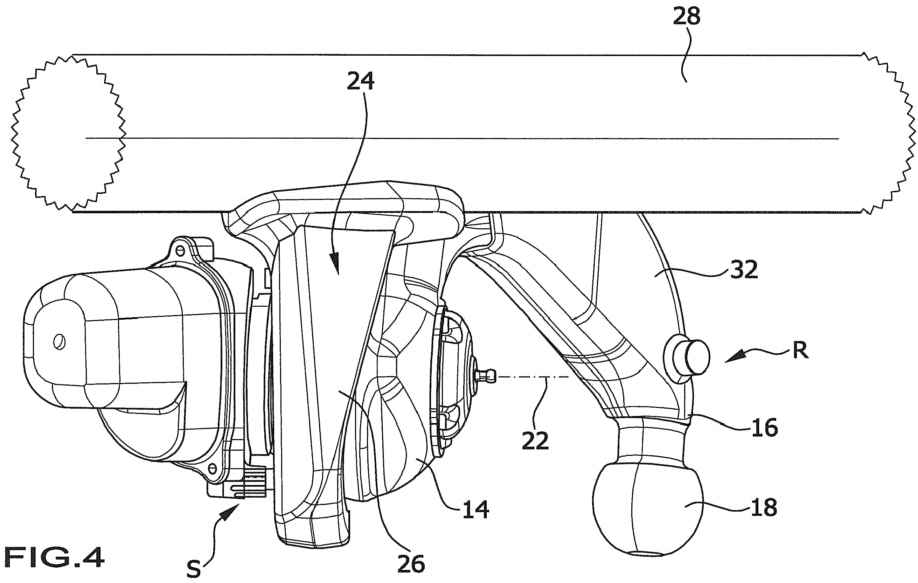

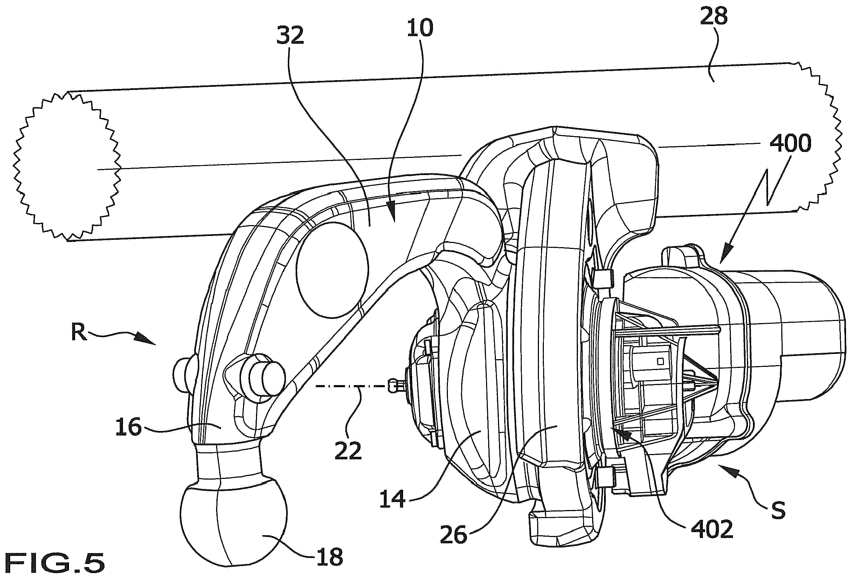

Ein Ausführungsbeispiel einer erfindungsgemäßen Anhängekupplung AK für ein Kraftfahrzeug K, dargestellt in den Fig. 1 bis 3 in einer Arbeitsstellung A und in Fig. 4 und 5 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine mit 18 bezeichnete Kupplungskugel trägt, an welcher eine Kupplungskugelaufnahme eines Anhängers oder eines Lastenträgers fixierbar ist.

Der Schwenklagerkörper 14 ist durch eine als Ganzes mit S bezeichnete Schwenkeinheit um eine Schwenkachse 22 relativ zu einem fahrzeugfest angeordneten Träger 24 schwenkbar gelagert, wobei der Träger 24 beispielsweise eine die Schwenkeinheit S haltende Tragplatte 26 aufweist, welche sich vorzugsweise in einer quer zur Schwenkachse 22 verlaufenden Ebene erstreckt und an einem fahrzeugfesten Querträger 28 gehalten ist, welcher in bekannter Weise in einem Heckbereich H einer Fahrzeugkarosserie F des Kraftfahrzeugs K befestigbar ist und zwar so, dass die Schwenkeinheit S und der Träger 24 auf einer einer Fahrbahnoberfläche FO abgewandten Seite einer Unterkante 30 einer Stoßfängereinheit liegen und in Fahrtrichtung des Kraftfahrzeugs K betrachtet von hinten durch die Stoßfängereinheit 36 abgedeckt sind, so dass in der Arbeitsstellung lediglich der Kugelhals 10 mit dem zweiten Ende 16 und der Kupplungskugel 18 sichtbar ist, während der gesamte Träger 24, insbesondere der Querträger 28, von der Stoßfängereinheit 36 verdeckt ist.

In der in Fig. 1 bis 3 dargestellten Arbeitsstellung A untergreift der Kugelhals 10 mit einem sich an das erste Ende 12 anschließenden Abschnitt 32 die Unterkante 30 der Stoßfängereinheit 36, so dass in der Arbeitsstellung das zweite Ende 16 und die Kupplungskugel 18 mit samt einer Steckdose 34 auf einer der Fahrzeugkarosserie F abgewandten Seite der hinteren Stoßfängereinheit 36 zugänglich sind.

Wird dagegen der Kugelhals 10 in die Ruhestellung R, dargestellt in Fig. 4 und 5, verschwenkt, so liegt der sich an das erste Ende 12 anschließende Abschnitt 32 des Kugelhalses 10 über der Fahrbahnoberfläche FO höher als die Kupplungskugel 18 und somit steht der gesamte Kugelhals 10 durch die Stoßfängereinheit 36 gegen Sicht von hinten verdeckt zwischen der Stoßfängereinheit 36 und dem Heckbereich H der Fahrzeugkarosserie F.

Außerdem liegt die gesamte Schwenkeinheit S sowohl in der Arbeitsstellung A als auch in der Ruhestellung R bei Betrachtung des Kraftfahrzeugs K in Fahrtrichtung von hinten stets durch die hintere Stoßfängereinheit 36 verdeckt zwischen dieser und dem Heckbereich H der Fahrzeugkarosserie F.

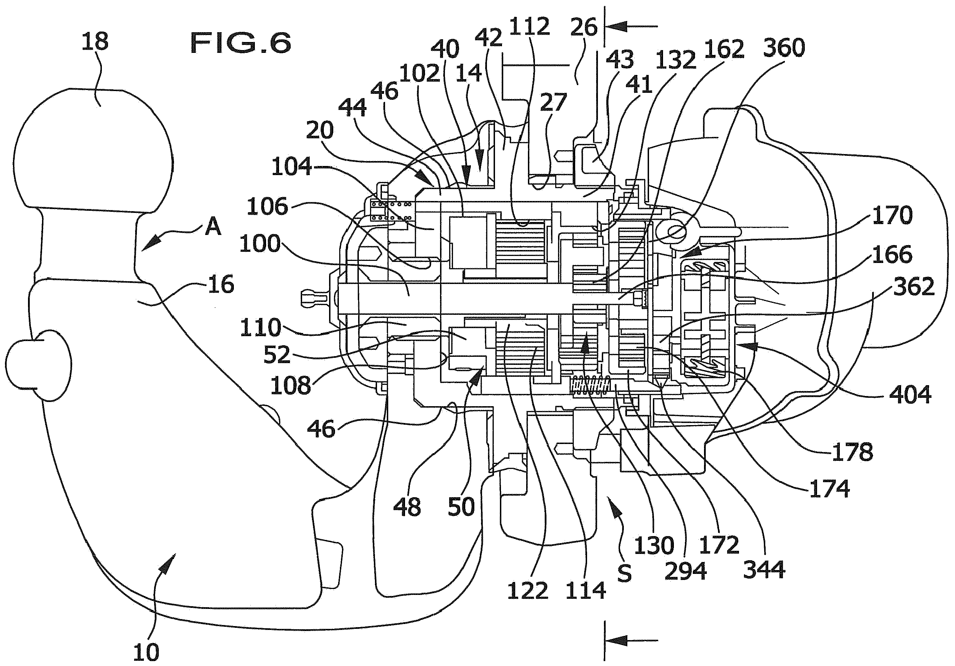

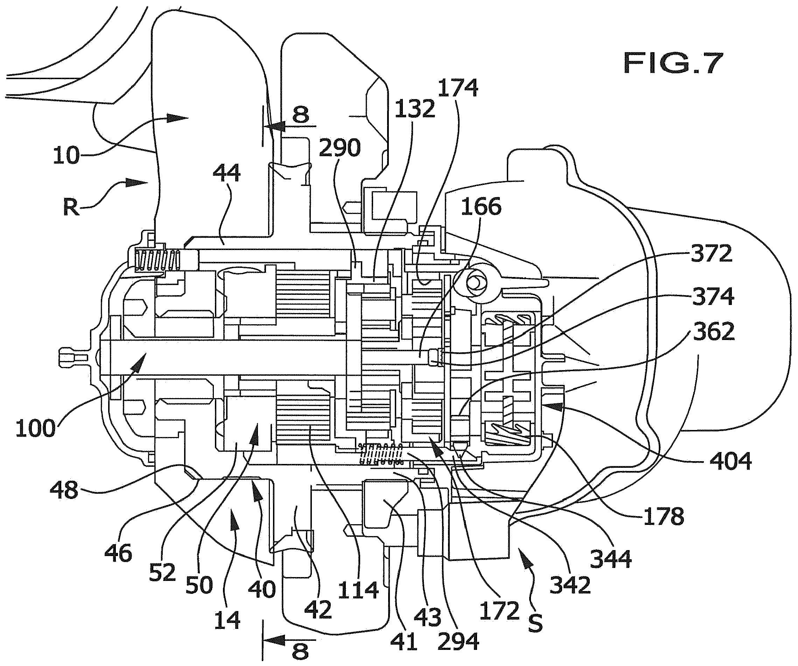

Die Schwenkeinheit S umfasst, wie in Fig. 6 und 7 dargestellt, eine Schwenklagereinheit 20, welche einen Führungskörper 40 aufweist, welcher mit einem Flansch 42 fest mit der Tragplatte 26 verbunden ist, und eine sich ausgehend von dem Flansch 42 von der Tragplatte 26 weg erstreckende Führungshülse 44, an welcher der Schwenklagerkörper 14 des Kugelhalses 10 um die Schwenkachse 22 drehbar gelagert ist.

Hierzu umfasst beispielsweise die Führungshülse 44 eine zylindrische Außenmantelfläche 46, an welcher der Schwenklagerkörper 14 mit einer zylindrischen Innenfläche 48 anliegt und dadurch um die Schwenkachse 22 eine Drehführung erfährt, so dass der Schwenklagerkörper 14 relativ zum Führungskörper 40 drehbar gelagert ist, um den Kugelhals 10 von der Arbeitsstellung A in die Ruhestellung R und umgekehrt zu verschwenken.

Der Führungskörper 40 umfasst außerdem einen sich durch einen Durchbruch 27 in der Tragplatte 26 erstreckenden Fortsatz 41, der sich bis zu einer dem Flansch 42 gegenüberliegenden Seite des Durchbruchs 27 erstreckt und einen Haltering 43 trägt, der auf einer dem Flansch 42 gegenüberliegenden Seite der Tragplatte 26 anliegt, so dass die Tragplatte 26 insgesamt zwischen dem Flansch 42 und dem Haltering 43 eingespannt ist und somit der Führungskörper 40 fest mit der Tragplatte 26 des Trägers 24 verbunden ist und somit eine fahrzeugfeste Drehlagerung für den Schwenklagerkörper 14 bildet.

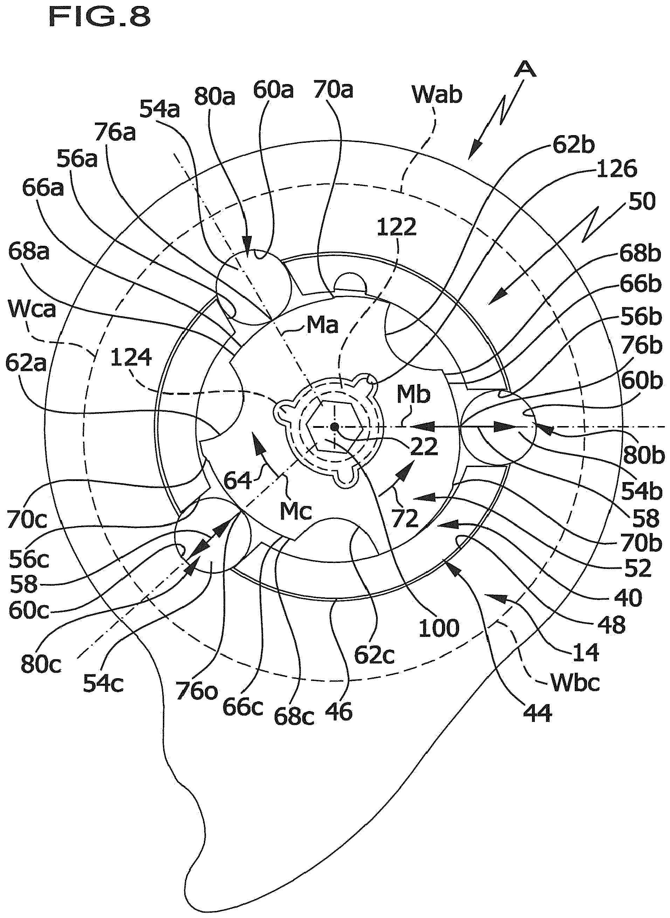

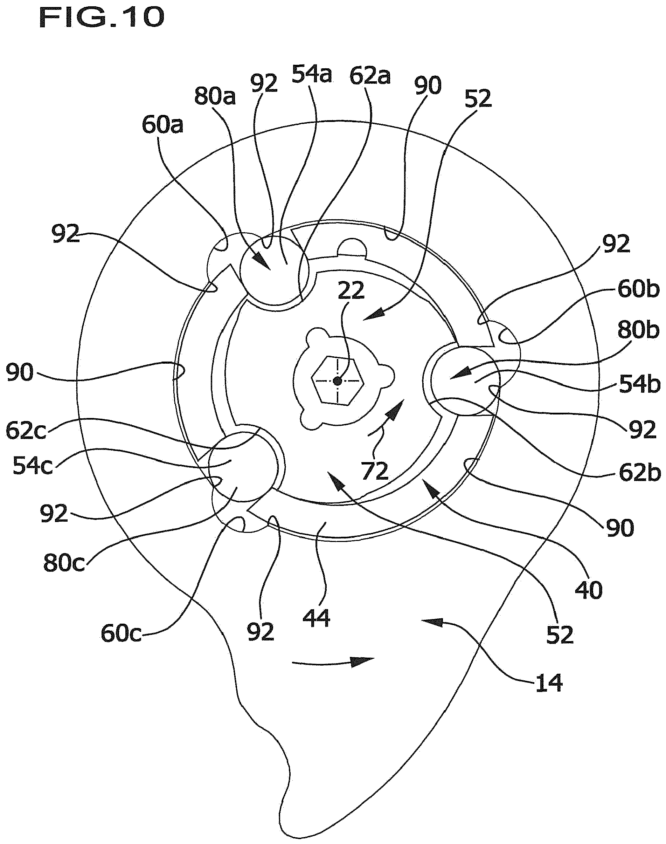

Zusätzlich zu der Schwenklagereinheit 20 umfasst die Schwenkeinheit S eine als Ganzes mit 50 bezeichnete Drehblockiereinrichtung, welche beispielsweise in die Schwenklagereinheit 20 integriert ist, jedoch auch unabhängig von der Schwenklagereinheit 20 angeordnet sein kann, und wie in den Fig. 8 bis 10 dargestellt, zusätzlich zum Betätigungskörper 52 mehrere, durch den Betätigungskörper 52 beaufschlagte Drehblockierkörper 54 aufweist, von denen jeder in einer Führungsaufnahme 56 der Führungshülse 44 in einer im Wesentlichen radial zur Schwenkachse 22 verlaufenden Führungsrichtung 58 bewegbar geführt ist.

Beispielsweise sind zumindest die Drehblockierkörper 54 und die Führungsaufnahmen 56 symmetrisch zu einer senkrecht zur Schwenkachse 22 verlaufenden und die Drehblockierkörper 54 schneidenden geometrischen Ebene angeordnet, die in den Fig. 8 bis 10 der Zeichenebene entspricht.

Ferner umfasst die Drehblockiereinrichtung 50 sich ausgehend von der Innenfläche 48 des Schwenklagerkörpers 14 insbesondere in radialer Richtung zur Schwenkachse 22 in diesen hineinerstreckende Aufnahmen 60, mit denen die Drehblockierkörper 54 in der Arbeitsstellung A in Eingriff bringbar sind, wobei die Aufnahmen 60 in radialer Richtung zur Schwenkachse 22 zunehmend einen geringeren Abstand voneinander aufweisende Wandflächen haben.

Umfasst beispielsweise die Drehblockiereinrichtung 50, wie im Zusammenhang mit Fig. 8 bis Fig. 10 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von Aufnahmen 60a, 60b und 60c versehen, mit welchen die Drehblockierkörper 54a, 54b und 54c in der Arbeitsstellung A in Eingriff bringbar sind.

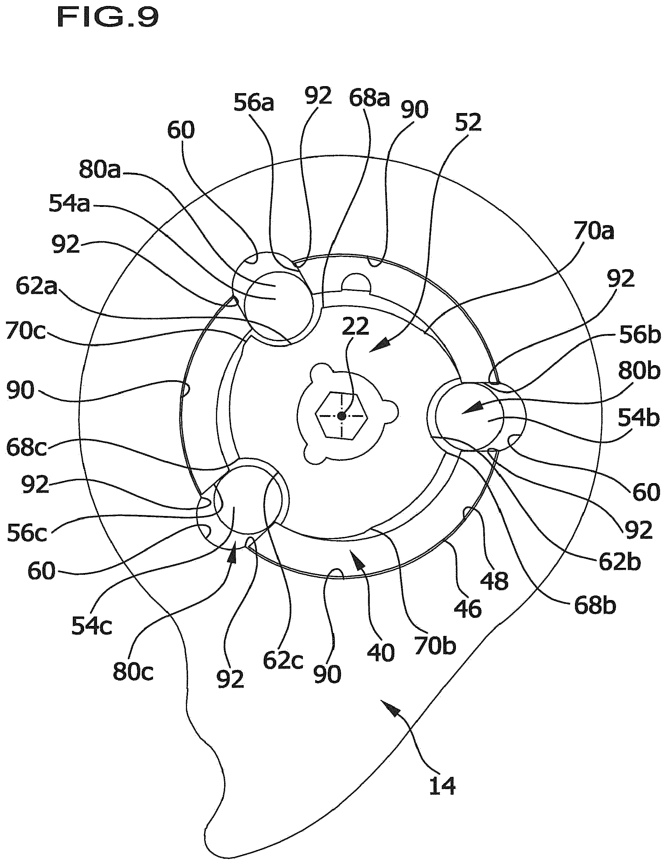

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von beispielsweise insgesamt drei, Rückzugsaufnahmen 62a, 62b und 62c und drei sich in einer Umlaufrichtung 64 an die Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können (Fig. 9), dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahmen 62 eintauchen zu lassen, ist der Betätigungskörper 52 ebenfalls um die Schwenkachse 22, insbesondere koaxial zu dieser, drehbar und zwar so, dass entweder der Satz von Rückzugsaufnahmen 62a, 62b und 62c den Drehblockierkörpern 54 zugewandt ist und diesen, wie in Fig. 9 dargestellt, in seiner inaktiven Stellung oder Lösestellung die Möglichkeit gibt, beim Übergang in die Lösestellung in die Rückzugsaufnahmen 62 in radialer Richtung zur Schwenkachse 22 hin einzutauchen, um den jeweiligen Drehblockierkörpern 54 die Möglichkeit zu eröffnen, die Aufnahmen 60 zu verlassen und mitsamt dem Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 9 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörpern 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst in der aktiven Stellung oder Drehblockierstellung des Betätigungskörpers 52 auf den Anfangsbereichen 68 der Druckflächen 66 aufsitzen, dabei jedoch beispielsweise in die Aufnahmen 60 eintauchen und damit in ihrer Drehblockierstellung die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend in der Arbeitsstellung A des Kugelhalses 10 in die Aufnahmen 60a, 60b und 60c hinein (Fig. 8), um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 8 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 so in der Führungshülse 44 gelagert, dass sich der Betätigungskörper 52 aufgrund des radialen Spiels relativ entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Aufnahmen 60a, 60b und 60c, so dass auch die auf den Betätigungskörper 52 wirkenden Reaktionskräfte ungefähr gleich groß sind.

Vorzugsweise sind die Drehblockierkörper 54, als Kugeln oder Rollen, ausgebildet, die somit einerseits an den Betätigungskörper 52 und andererseits auch an den Aufnahmen 60 anliegen.

Somit erfolgt nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält, in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 114 beaufschlagt (Fig. 6 und 7), die einerseits auf den Betätigungskörper 52 wirkt und andererseits radial außenliegend an dem Führungskörper 40 abgestützt ist.

Die Drehfeder 114 bewirkt auch, dass der Betätigungskörper 52 die Drehblockierkörper 54 kraftbeaufschlagt in die Aufnahmen 60 drückt und somit wird der Schwenklagerkörper 14 spielfrei fixiert, wobei die Spielfreiheit auch bei sich aufgrund der Belastungen im Betrieb verändernden Geometrie der Aufnahmen 60 durch ein Weiterdrehen des Betätigungskörpers 52 in der Drehrichtung 72 aufrechterhalten wird.

Die Drehblockiereinrichtung 50 kann so ausgebildet sein, dass eine drehfeste Fixierung des Kugelhalses 10 in der Arbeitsstellung A und der Ruhestellung R erfolgt, wie beispielsweise in der EP 2 261 066 A beschrieben, oder so, dass eine drehfeste Fixierung des Kugelhalses 10 nur in der Arbeitsstellung A erfolgt, wie beispielsweise in der EP 3 141 405 A oder der EP 3 815 936 A beschrieben.

Die Führungshülse 44 erstreckt sich vorzugsweise mit einem eine Aufnahme 102 für den Betätigungskörper 52 bildenden Abschnitt zwischen dem Flansch 42 und einem die Führungshülse 44 abschließenden sich radial zur Schwenkachse 22 erstreckenden Flansch 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Flansches 104 geführt ist.

Der Flansch 104 weist ferner noch eine zur Schwenkachse 22 koaxiale Aufnahme 106 auf, in welcher ein von einer Schwenkantriebswelle 100 durchsetzter Einsatz 110 eingesetzt, insbesondere eingeschraubt, ist, der in der Aufnahme 106 sitzt.

Auf einer dem Flansch 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 die Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

Hierzu ist die Antriebshülse 122, wie in den Fig. 7, 8 und 11 dargestellt, beispielsweise mit Fortsätzen 124 versehen, die zur Herstellung einer Formschlussverbindung in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers 52 in der Drehrichtung 72, so dass der Betätigungskörper 52 bei ungehinderter Einwirkung der Drehfeder 114 auf die Antriebshülse 122 den Betätigungskörper 52 stets in der Drehrichtung 72 beaufschlagt, so dass dieser die Tendenz hat die Drehblockierkörper 54 kraftbeaufschlagt in der Führungsrichtung 58 radial von der Schwenkachse 22 weg nach außen zu bewegen, wobei beispielsweise diese Bewegung durch die Blockierflächen 90 bei geeigneter Ausbildung derselben in allen vorgesehenen Schwenkstellungen des Schwenklagerkörpers 14, mit Ausnahme der Arbeitsstellung A, verhindert werden kann, wie beispielsweise in der DE 10 2020 111 469 A beschrieben, und folglich nur in der Arbeitsstellung A die Drehblockierkörper 54 in die Aufnahmen 60 gedrückt werden und somit der Schwenklagerkörper 14 relativ zur Führungshülse 44 drehfest und insbesondere spielfrei fixiert wird.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 mittels eines als Ganzes mit 130 bezeichneten Verteilgetriebes 130, insbesondere eines Verteilgetriebes oder Umlaufgetriebes, antreibbar (Fig. 6, 7), welches in einer Getriebeaufnahme 132 der Führungshülse 44, insbesondere koaxial zur Schwenkachse 22, angeordnet ist, welches beispielsweise teilweise innerhalb des Durchbruchs 27 der Trägerplatte 26 angeordnet ist und vorzugsweise sich auf einer dem Flansch 42 gegenüberliegenden Seite von dem Durchbruch 27 der Trägerplatte 26 weg erstreckt.

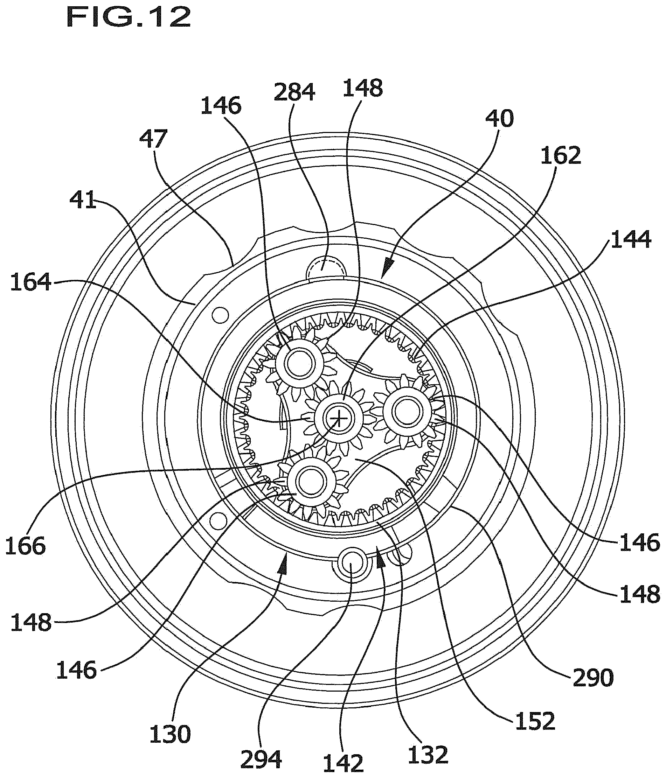

Das Verteilgetriebe 130 (Fig. 12) umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der Schwenkantriebswelle 100 verbunden ist, so dass der Planetenradträger 152 einen Abtrieb des Verteilgetriebes 130 zum Ausführen des Verschwenkens des Kugelhalses 10 bildet.

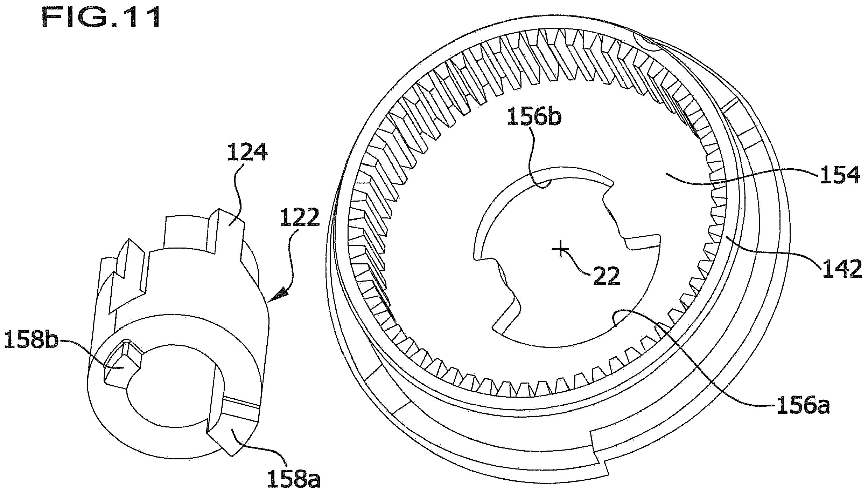

Ferner umfasst - wie in Fig. 11 dargestellt - das Hohlrad 142 einen zwischen dem Planetenradträger 152 und der Drehfeder 114 liegenden Flanschkörper 154, welcher sich ebenfalls in Richtung der Schwenkantriebswelle 100 erstreckt, diese umschließt, jedoch relativ zu dieser drehbar ist und einen Abtrieb des Verteilgetriebes 130 zum Betätigen der Drehblockiereinrichtung 50 darstellt.

Wie in Fig. 11 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Verteilgetriebes 130, das auf einem Wellenstummel 166 der Schwenkantriebswelle 100 und relativ zur Schwenkantriebswelle 100 frei drehbar, jedoch koaxial zu dieser gelagert ist.

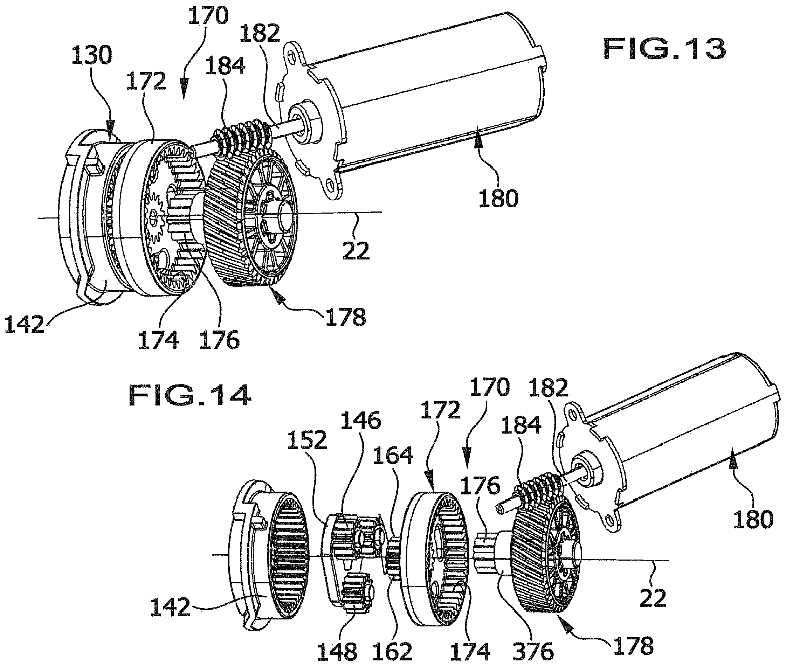

Wie in Fig. 13 und Fig. 14 dargestellt, wird das Sonnenrad 162 durch ein Untersetzungsgetriebe 170 angetrieben, welcher seinerseits abtriebsseitig ein mit dem Sonnenrad 162 drehfest gekoppeltes Hohlrad 172 aufweist, welches mit einer Innenverzahnung versehen ist, in welche ein exzentrisch zur Schwenkachse 22 angeordnetes Ritzel 176 eingreift, das seinerseits wiederum drehfest mit einem Schneckenrad 178 verbunden ist, welches durch eine auf einer Abtriebswelle 182 eines Antriebsmotors 180 angeordneten Antriebsschnecke 184 angetrieben ist, wobei die Antriebsschnecke 184 das antriebsseitige Getriebeelement des Untersetzungsgetriebes 170 darstellt.

Somit ist durch das Verteilgetriebe 130, das Untersetzungsgetriebe 170 und den Antriebsmotor 180 eine Betätigung für die Drehblockiereinrichtung 50 sowie einem Verschwenken des Kugelhalses 10 mittels des Antriebsmotors 180 realisierbar.

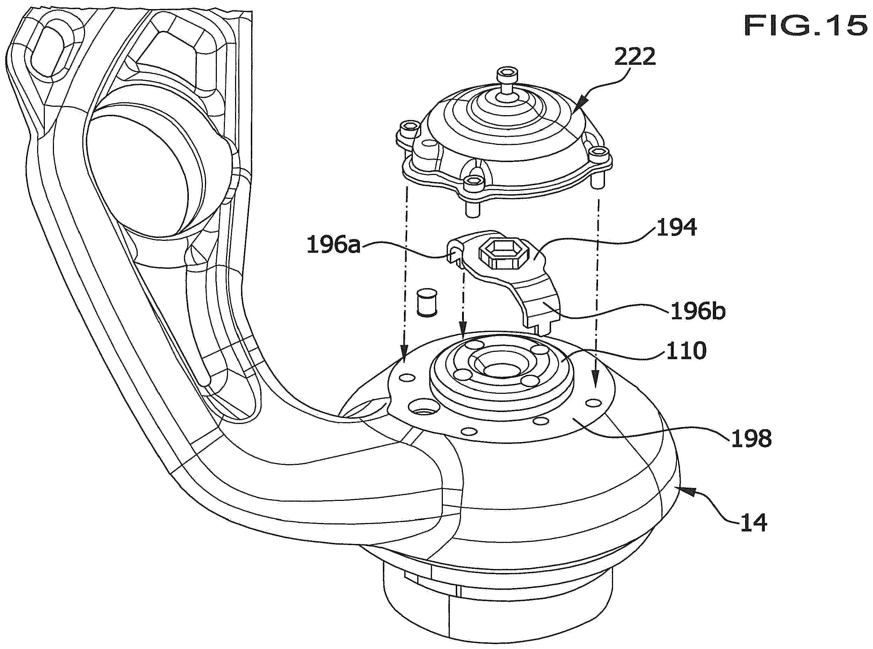

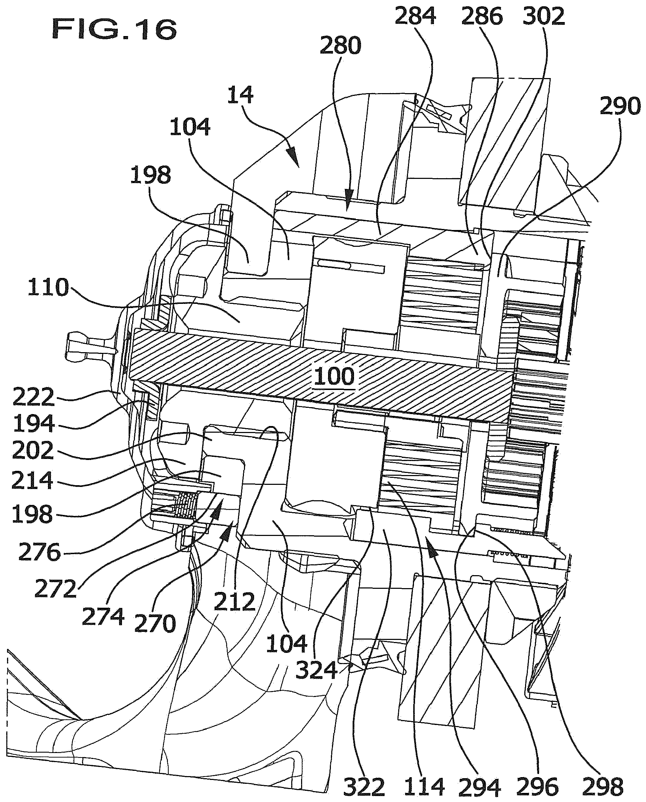

Die mit dem Planetenradträger 152 drehfest gekoppelte Schwenkantriebswelle 100 durchsetzt - wie bereits beschrieben - den Flansch 104 des Führungskörpers 40 und ist an einem über den Einsatz 110 überstehenden Ende 192 drehfest mit einem Antriebskörper 194 gekoppelt (Fig. 15 und 16), welcher zwei Antriebsarme 196a und 196b aufweist, die sich in Richtung eines Endflansches 198 des Schwenklagerkörpers 14 erstrecken, welcher einen außenliegenden Bereich 200 des Flansches 104 des Führungskörpers 14 übergreift, und dabei formschlüssig in Ausnehmungen desselben eingreifen, um zwischen dem Antriebskörper 194 und dem Schwenklagerkörper 14 eine drehfeste Verbindung herzustellen.

Der Endflansch 198 übergreift dabei den Flansch 104 des Führungskörpers 40 in dem außenliegenden Bereich 200 und erstreckt sich bis zu einem Führungsansatz 202 des Flansches 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 koaxial zur Schwenkachse 22 geführt ist.

Darüber hinaus erstreckt sich in der Aufnahme 106 des Führungsansatzes 202 ein Gewinde 212, in welchem der Einsatz 110 fixiert, insbesondere eingeschraubt, ist, der mit einem Außenflansch 214 den Endflansch 198 partiell in einem radial innenliegenden Bereich übergreift, so dass der Endflansch 198 des Schwenklagerkörpers 14 axial unverschiebbar zwischen dem Flansch 104 und dem Außenflansch 214 des Einsatzes 110 und somit relativ zum Führungskörper 40 axial unverschiebbar geführt ist.

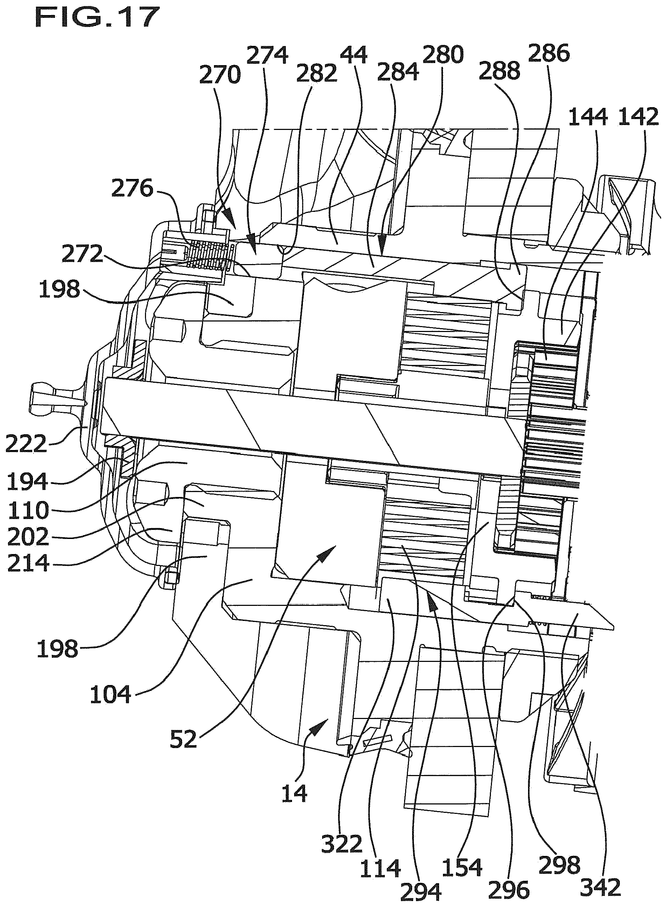

Auf dem Endflansch 198 ist ferner eine Abdeckung 222 drehfest montiert, welche den Antriebskörper 194 mit den Antriebsarmen 196 übergreift und eine Lageraufnahme 224 für das Ende 192 der Führungswelle 100 bildet, so dass die Abdeckung 222 mit dem Schwenklagerkörper 14 eine Einheit bildet, die um die Schwenkachse 22 drehbar ist (Fig. 17).

Die Abdeckung 222 sitzt dabei auf dem Endflansch 198 auf, und ist auf diesem drehfest fixiert.

Bei der vorstehend beschriebenen Lösung ist nur ein Satz von Aufnahmen 60 für die drehfeste Festlegung des Schwenklagerkörpers 14 in der Arbeitsstellung A vorgesehen, während in der Ruhestellung R eine Festlegung des Schwenklagerkörpers 14 durch die Drehblockiereinrichtung 50 nicht vorgesehen ist.

Vielmehr ist zur Festlegung des Schwenklagerkörpers 14 in der Ruhestellung, wie in Fig. 16 und 17 dargestellt, eine Ruhestellungsrasteinrichtung 270 vorgesehen, welche einen in dem Endflansch 198 in einer Bohrung 272 vorgesehenen Rastkörper 274 aufweist, welcher durch ein beispielsweise in der Bohrung 272 angeordnetes Federelement 276 in Richtung einer zu der Bohrung 272 parallelen Rastrichtung und in Richtung des Flansches 104 kraftbeaufschlagt ist wobei der Rastkörper 274 in allen Drehstellungen des Schwenklagerkörpers 214 bis auf die Ruhestellung Ran dem außenliegenden Bereich 200 des Flansches 104 anliegt, welcher den Rastkörper 274 in seiner inaktiven Stellung hält, und wobei der Rastkörper 274 in eine als Rastbohrung ausgebildete Rastaufnahme 282 in dem Flansch 104 nur dann eingreift, wenn der Schwenklagerkörper 14 in der Ruhestellung steht (Fig. 17).

Hierzu beaufschlagt das Federelement 276 den Rastkörper 274 ständig in Richtung der dem Endflansch 198 zugewandten Flanschseite des Flansches 104 und hält diesen somit ständig in einer Rastbereitschaftsstellung, wobei ein Eingreifen des Rastkörpers 274 in die Rastaufnahme 282 und somit ein Übergang von der inaktiven Stellung in die aktive Raststellung nur dann möglich ist, wenn der Schwenklagerkörper 14 die der Ruhestellung R entsprechende Drehstellung relativ zum Führungskörper 40 der Schwenklagereinheit 20 erreicht hat.

Zum Deaktivieren der Ruhestellungsrasteinrichtung 270, das heißt zum Aufheben der Raststellung des Rastkörpers 274, ist in Fortsetzung der Rastaufnahme 282 in der Führungshülse 44 ein Betätigungsstift 284 vorgesehen, welcher mit einem Tastkopf 286 eine an dem Hohlrad 142 vorgesehene Kulissenbahn 288 abtastet, die an einem radial außenliegend zur Innenverzahnung 144 an dem Hohlrad 142 umlaufenden Kulissenflansch 290 angeordnet ist und somit eine Deaktivierungseinheit 280 für die Ruhestellungsrasteinrichtung 270 bildet.

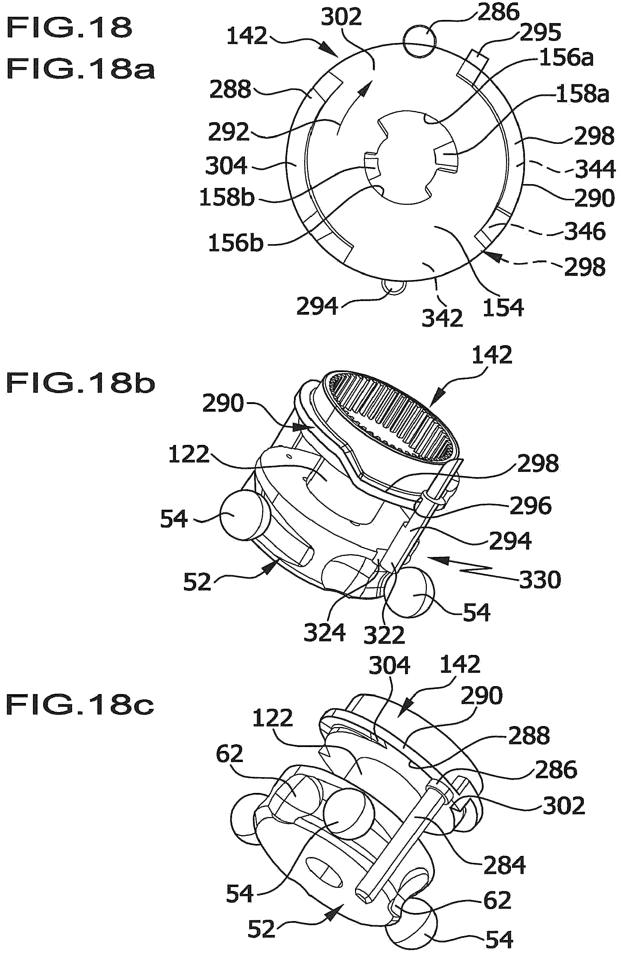

Die Fig. 18 bis 24 zeigen das Zusammenwirken der Drehbewegung des Hohlrades 142 ausgehend von einer in der Arbeitsstellung vorliegenden Ruhestellung bei Drehung in einer Drehrichtung 292 mit der Antriebshülse 122 zum Antreiben des Betätigungskörpers 52 mittels der Antriebsschlitze 156a und 156b, die in dem Flanschkörper 154 des Hohlrades 142 angeordnet sind, mit den in diese Antriebsschlitze 156a, 156b eingreifenden Antriebsfingern 158a, 158b sowie mit dem Tastkopf 286 des Betätigungsstifts 284 und einem Sicherungsstift 294, der mit einer ebenfalls von dem Kulissenflansch 290 gebildeten Kulissenbahn 298 zusammenwirkt und diese Kulissenbahn 298 mittels einer Abtastfläche 296 abtastet (Fig. 17), wie nachfolgend noch im Detail erläutert.

In der in Fig. 18 dargestellten Ausgangsstellung steht der Tastkopf 286 auf einem Bahnabschnitt 302 der Kulissenbahn, wodurch der Betätigungsstift 284, wie in Fig. 16 dargestellt, in einer Stellung steht, in welcher dieser ein Lösen des Rastkörpers 274 der Ruhestellungsrasteinrichtung 270 bewirken würde, sofern der Schwenklagerkörper 14 in der Ruhestellung stehen würde. Da der Schwenklagerkörper 14 jedoch gemäß Fig. 18 in der Arbeitsstellung steht, ist der Betätigungsstift 284 wirkungslos.

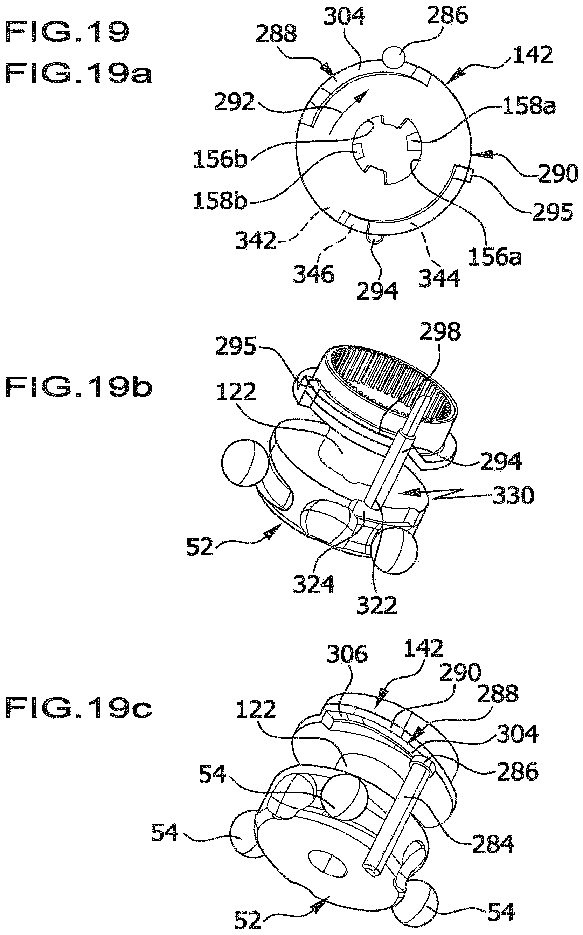

Erfolgt nun ein Antreiben des Hohlrades 142 mittels des Verteilgetriebes 130, so dreht sich das Hohlrad 142 in der Drehrichtung 292 und der Tastkopf 286 bewegt sich auf einem Bereich 304 der Kulissenbahn 288 welcher gegenüber dem Bereich 302 in Richtung parallel zur Schwenkachse zurückgesetzt ist, so dass dieser ein Bewegen des Betätigungsstiftes 284 erlaubt sofern dieser von dem Rastkörper 274 beaufschlagt wird, wobei dies jedoch nicht der Fall ist, so dass der Betätigungsstift 284 auch in der Stellung verharren kann, die durch den Bereich 302 der Kulissenbahn 288 vorgegeben wurde (Fig. 19).

Wie ferner in Fig. 19a erkennbar, erfolgt die Drehung des Hohlrades 142 mit dem Kulissenflansch 290 zunächst ohne dass ein Antrieb der Antriebshülse 122 erfolgt, da die Antriebsschlitze 156a, 156b eine derartige Relativdrehung des Hohlrades relativ zu den Antriebsfingern 158a, 158b erlauben, ohne diese mitzudrehen.

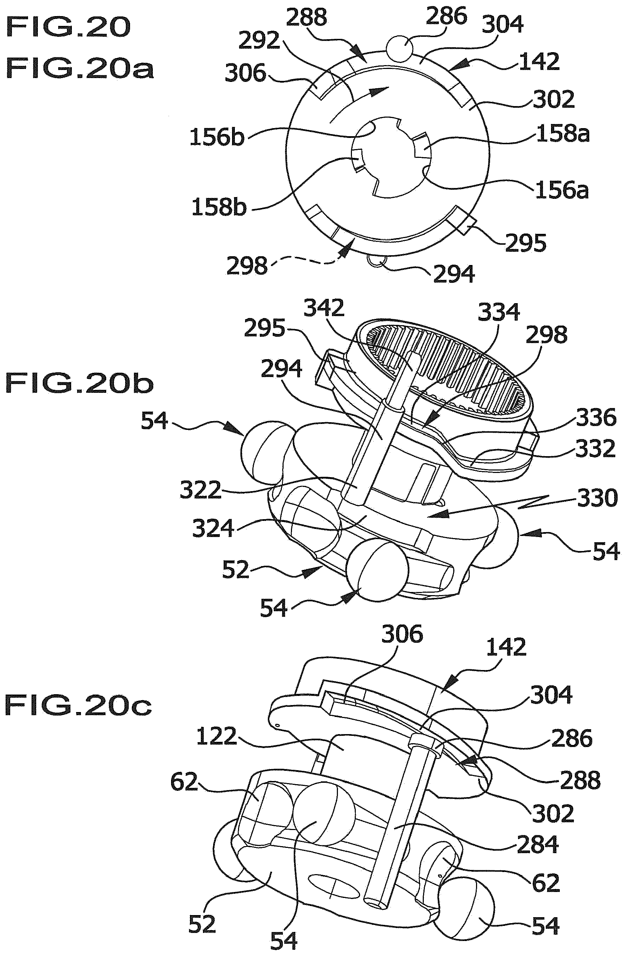

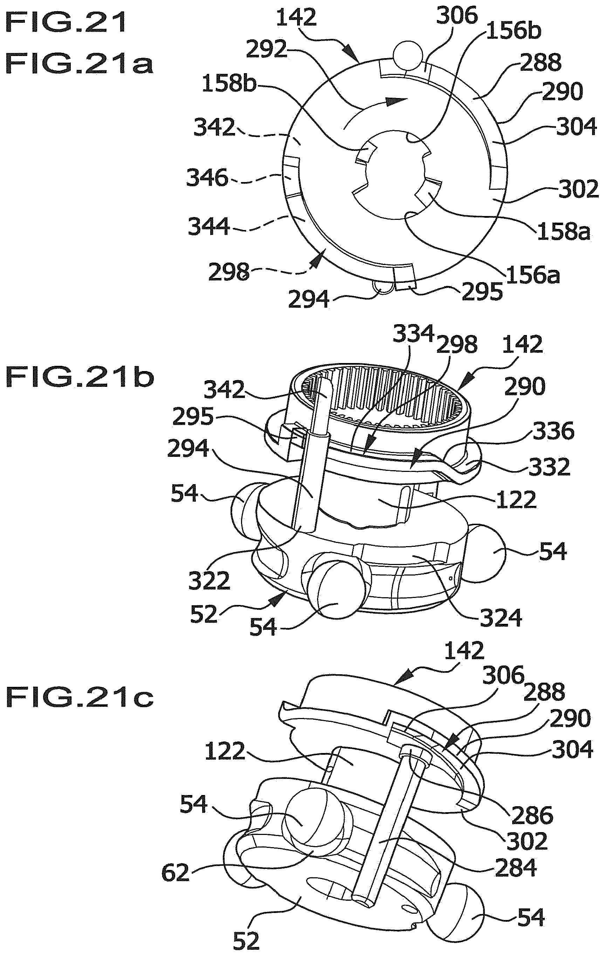

Das Hohlrad 142 kann dabei noch weiter gedreht werden, so lange, bis die Antriebsschlitze 156a, 156b an den Antriebsfingern 158a, 158b in der Drehrichtung 292 anliegen (Fig. 20), wobei sich der Tastkopf 286 des Betätigungsstifts 284 weiter relativ zur Kulissenbahn 288 über den Bereich 304 derselben bewegt und der Bereich 304 zunehmend relativ zum Bereich 302 zurückgesetzt verläuft. Die Mitnahme der Antriebshülse 122 durch Mitdrehen der Antriebsfinger 158a, 158b um die Schwenkachse führt nun dazu, dass zusätzlich auch noch eine Drehung des Betätigungskörpers 52 erfolgt, und zwar, wie in Fig. 20 dargestellt, soweit, bis die Drehblockierkörper 54 in die diesen zugeordneten Rückzugsaufnahmen 62 eintauchen können und somit die Lösestellung erreichen (Fig. 21), in welcher diese in den Rückzugsaufnahmen 62 liegen, so dass nunmehr die Drehblockiereinrichtung 50 in ihrer Lösestellung steht und eine Drehbewegung des Schwenklagerkörpers 14 freigibt, so dass dieser aus der Arbeitsstellung herausschwenken kann.

Beim Erreichen der Lösestellung wird die weitere Drehbewegung des Hohlrades 142 in dieser Richtung durch einen an dem Sicherungsstift 294 zur Anlage kommenden Anschlag 295 verhindert und es erfolgt durch das Freigeben der Schwenkbewegung des Schwenklagerkörpers 14 ein Verschwenken desselben.

Durch das Verlassen der Arbeitsstellung A erfolgt - wie vorstehend beschrieben - eine Blockade des Betätigungskörpers 52 in der Lösestellung durch mindestens einen an den Blockierflächen 90 anliegenden Drehblockierkörper 54 und außerdem ist auch die Drehstellung der Antriebshülse 122 und somit auch deren Antriebsfinger 158a und 158b in der der Lösestellung des Betätigungskörpers 52 entsprechenden Drehstellung festgelegt, die gemäß Fig. 21 ebenfalls der Drehstellung des Hohlrades 142 entspricht.

Läuft der Antrieb des Verteilgetriebes 130 weiter, um den Schwenklagerkörper 14 von der Arbeitsstellung A in die Ruhestellung R zu verschwenken, so wird der Betätigungskörper 52 durch das Hohlrad 142 derart maximal in die Lösestellung verdreht, das die Drehblockierkörper 54 maximal tief in die Rückzugsaufnahmen 62 eintreten können, so dass die Drehblockierkörper 54 mit Spiel zwischen den Rückzugsaufnahmen und der Blockierfläche 90 liegen, wie in Fig. 9 dargestellt.

Je nach dem beim Verschwenken des Schwenkelements 14 auftretenden Gegendrehmoment in Relation zu dem Drehmoment der Drehfeder 114, bleibt beim Verschwenken des Schwenklagerkörpers 14 mit dem Kugelhals 10 von der Arbeitsstellung A in die Ruhestellung R der Drehblockierkörper 52 in der maximal verdrehten Lösestellung oder es erfolgt durch das Drehmoment der Drehfeder 114 eine Verdrehung des Betätigungskörpers 52 in der Drehrichtung 72, so dass die Rückzugsaufnahmen 62 mit den gewölbten und schräg zur jeweiligen Führungsrichtung 58 verlaufenden Grundflächen auf die Drehblockierkörper 54 einwirken und mindestens einen derselben an einer der Blockierflächen 90 anlegen bis die Ruhestellung R erreicht ist.

Auf jeden Fall entfällt die Einwirkung des Hohlrads 142 bei Erreichen der Ruhestellung R, so dass spätestens dann die Drehfeder 114 den Betätigungskörper 52 in der Drehrichtung 72 so weit verdreht, dass die Rückzugsaufnahmen 62 auf die Drehblockierkörper 54 einwirken und diejenigen Drehblockierkörper 54, die vor einer der Blockierflächen 90 stehen an den Blockierflächen 90 anlegen.

In dieser Drehstellung des Hohlrades 142 hat der Betätigungsstift 284 die Möglichkeit, sich so weit zu bewegen, dass der Rastkörper 274 der Ruhestellungsrasteinrichtung 270 in die Rastaufnahme 282 eintaucht und den Schwenklagerkörper 14 in der Ruhestellung fixieren kann. Dies erfolgt jedoch erst, wenn der Schwenklagerkörper 214 die Ruhestellung R erreicht hat.

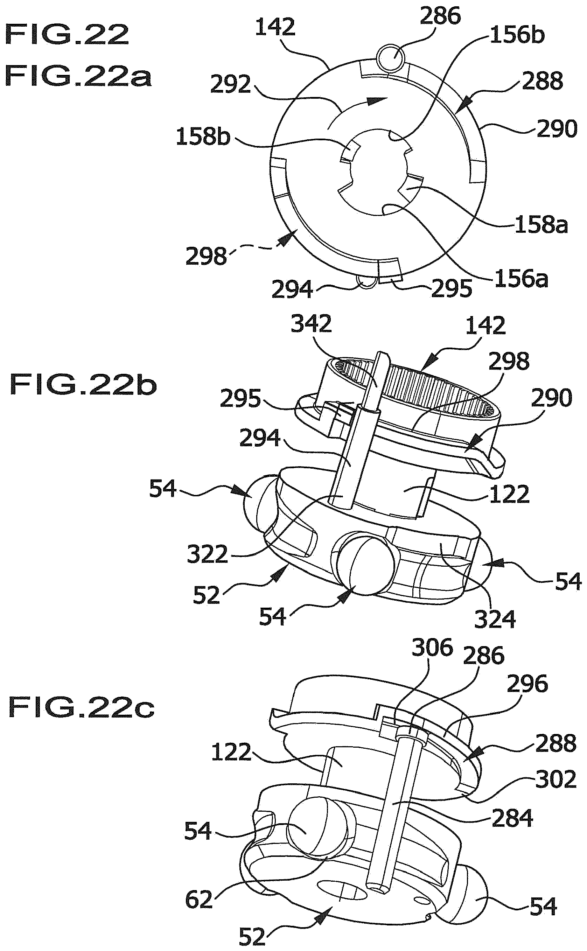

Diese Stellung ist in Fig. 22 dargestellt, und wird erreicht durch ausgehend von der Stellung gemäß Fig. 21 erfolgendes Weiterdrehen des Hohlrads 142 in der Drehrichtung 292.

In dieser Stellung erfolgt eine Beaufschlagung des Betätigungsstifts 284 durch den Rastkörper 274, so dass der Tastkopf 286 so weit bewegt wird, bis dieser an dem Bereich 306 der Kulissenbahn 288 anliegt, wobei dadurch der Betätigungsstift 284 das Eingreifen des Rastkörpers 274 in die Rastaufnahme 282 erlaubt.

Nach Erreichen der Ruhestellung des Schwenklagerkörpers 14 erfolgt auch ein Abschalten des Antriebsmotors 180 für das Verteilgetriebe 130, so dass das Hohlrad 142 in der in Fig. 22 dargestellten Stellung verbleibt, und somit auch der Betätigungsstift 284 durch Auflegen des Tastkopfes 286 auf dem Bereich 306 der Kulissenbahn 288 die Ruhestellung des Schwenklagerkörpers 214 aufrecht erhält, dadurch dass der Rastkörper 274 in der Rastaufnahme durch die Einwirkung des Federelements 276 verbleibt, ohne dass der Betätigungsstift 284 entgegenwirkt.

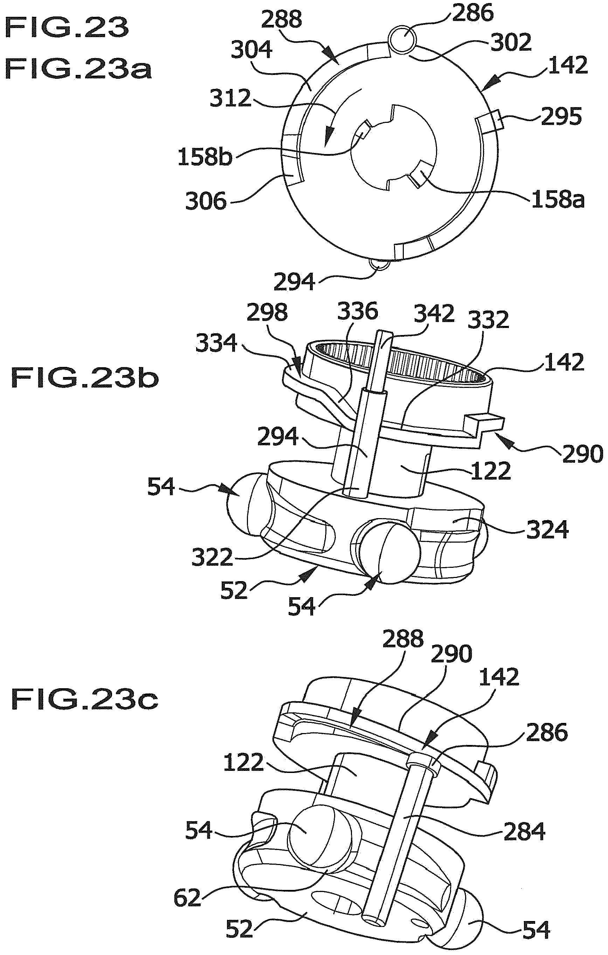

Soll nun wieder ein Übergang des Schwenklagerkörpers 214 von der Ruhestellung in die Arbeitsstellung erfolgen, so erfolgt wiederum ein Antreiben des Verteilgetriebes 130, allerdings nunmehr in umgekehrter Richtung, so dass sich auch das Hohlrad 242 in umgekehrter Drehrichtung, in diesem Fall in Drehrichtung 312 dreht (Fig. 23).

Dadurch bewegt sich die Kulissenbahn 288 relativ zu dem Tastkopf 286 des Betätigungsstifts 284 und der Tastkopf 286 wandert längs der Kulissenbahn 288 in den Bereich 302, was dazu führt, dass durch den ausgehend von dem Bereich 306 ansteigenden Bereich 304 ein Verschieben des Betätigungsstiftes 284 in Richtung des Endflansches 198 und somit ein Herausschieben des Rastkörpers 274 aus der Rastaufnahme 282 erfolgt, so dass dadurch die Ruhestellungsrasteinrichtung 270 in ihre gelöste Stellung übergeht und somit die Verrastung des Schwenklagerkörpers 214 in der Ruhestellung nicht mehr vorliegt.

Dabei ist jedoch nach wie vor der Betätigungskörper 52 der Drehblockiereinrichtung 50 in seiner Lösestellung fixiert, wobei ein Lösen der Blockierung des Drehblockierkörpers 52 in der Lösestellung in Abhängigkeit von der Drehstellung des Schwenklagerkörpers 14 erst - wie beschrieben - in der Arbeitsstellung A erfolgt.

Nach dem Aufheben der Blockierung des Betätigungskörpers 52 in der Arbeitsstellung erfolgt eine Drehbewegung des Betätigungskörpers 52 durch Einwirkung der Drehfeder 114, so dass der Betätigungskörper 52 sich mit der Antriebshülse 122 in der Drehrichtung 312 ebenfalls zu drehen beginnt und sich relativ zum Hohlrad 142 aufgrund der Bewegbarkeit der Antriebsfinger 158 relativ zu den Antriebsschlitzen 156 dreht, was in Fig. 23 dargestellt ist, so dass die Antriebsfinger 158a, 158b sich relativ zu den Antriebsschlitzen 156a und 156b in der Drehrichtung 312 zu bewegen beginnen, um dann wiederum in der Arbeitsstellung die in Fig. 18 dargestellte Drehstellung zu erreichen.

Wie außerdem in den Fig. 18 bis 24 dargestellt, trägt der Kulissenflansch 290 des Hohlrads 142 nicht nur die Kulissenbahn 288 zur Betätigung des Betätigungsstifts 284 sondern außerdem die Sicherungskulissenbahn 298 zur Betätigung des Sicherungsstifts 294, dargestellt in den Fig. 16 und 17 sowie in den Fig. 18 bis 24.

Der Sicherungsstift 294 weist dabei einen Sicherungskörper 322 auf, welcher zur Sicherung der Drehstellung des Betätigungskörpers 52 in der Drehblockierstellung in eine Sicherungsausnehmung 324 eingreift, die derart gestaltet ist, dass der Betätigungskörper 52 nicht in der Lage ist, die Drehblockierstellung zu verlassen und somit die Drehblockierstellung in der Arbeitsstellung, das heißt somit auch die Verriegelung des Schwenklagerkörpers 214 in der Arbeitsstellung, gesichert ist.

Der durch die Sicherungskulissenbahn 298 bewegbare Sicherungsstift 294 bildet zusammen mit dem Sicherungskörper 322 und der Sicherungsausnehmung 324 eine Sicherungseinrichtung 330.

Die Sicherungskulissenbahn 298 ist vorzugsweise gegenüberliegend zur Kulissenbahn 288 an dem Kulissenflansch 290 angeordnet und derart geformt, dass diese den Sicherungsstift 294 ausgehend von seiner Sicherungsstellung (Fig. 18), in welcher der Sicherungskörper 322 in die Sicherungsausnehmung 324 eingreift (Fig. 18c), bereits nach der anfänglichen Drehung des Hohlrades 142 ausgehend von der Ausgangsstellung in der Drehrichtung 292 soweit verschiebt, dass der Sicherungskörper 322 die aus der Sicherungsausnehmung 324 des Betätigungskörpers 52 heraustritt (Fig. 19c), um die nachfolgende Drehbewegung des Betätigungskörpers 52 freizugeben.

Die Sicherungskulissenbahn 298 ist hierzu mit einem eine Sicherung der Drehblockierstellung des Betätigungskörpers 52 erlaubenden sichernden Bereich 332 und eine Entsicherung der Bewegung des Drehblockierkörpers 52 bewirkenden entsichernden Bereich 334 versehen, die durch einen Übergangsbereich 336 miteinander verbunden sind.

Darüber hinaus ist der Sicherungsstift 294 noch mit einem Fortsatz 342 versehen, welcher je nach Position des Sicherungsstifts 294 einen Taster 344 betätigt oder nicht betätigt wobei beispielsweise der Taster 344 so angeordnet ist, dass dieser in der entsichernden Stellung des Sicherungsstifts 294 betätigt ist (Fig. 7) und in der sichernden Stellung des Sicherungsstifts 294 nicht betätigt ist (Fig. 6), wobei die Betätigung des Tasters 344 auch in umgekehrter Weise erfolgen kann.

Die erfindungsgemäße Anhängekupplung funktioniert nun folgendermaßen.

Ausgehend von der Arbeitsstellung A, dargestellt in den Fig. 1, 2, 3 und 6, in welcher der Schwenklagerkörper 14 relativ zum Führungskörper 40 in Bezug auf eine Drehbewegung um die Schwenkachse 22 durch die Drehblockiereinrichtung drehblockiert ist, nämlich dadurch, dass der Betätigungskörper 52 die Drehblockierkörper 54 in der Führungsrichtung 58 radial so weit von der Schwenkachse 22 weg nach außen bewegt hat, dass diese in die Aufnahmen 60 eingreifen und dadurch den Schwenklagerkörper 14 relativ zum Führungskörper 40 drehblockiert fixieren, bewirkt ein Einschalten des Antriebsmotors 180, dass das Untersetzungsgetriebe 170 das Sonnenrad 162 antreibt (Fig. 18).

Dieses treibt wiederum die Planetenräder 146 an, die jedoch dadurch, dass der Schwenklagerkörper 14 hinsichtlich einer Drehbewegung um die Schwenkachse 22 durch die Drehblockiereinrichtung 50 blockiert ist, ebenfalls blockiert sind, so dass sich die Antriebsarme 196 des Antriebskörpers 194 relativ zu den Anlagekörpern 226 und 228 nicht verdrehen können, und folglich auch eine Drehbewegung der Führungswelle 100, mit welcher der Planetenradträger 152 drehfest verbunden ist, nicht erfolgen kann.

Dadurch erfolgt ein Antrieb des Hohlrades 142 dergestalt, dass dieses sich gemäß Fig. 18 in der Drehrichtung 292 verdreht. Zunächst bewirkt diese Drehung des Hohlrades 142 eine Betätigung der Sicherungseinrichtung 330, wobei durch Verschieben des Sicherungsstifts 294 der Sicherungskörper 322 die Sicherungsausnehmung 324 des Betätigungskörpers 52 verlässt und von der Sicherungsstellung in die Entsicherungsstellung übergeht (Fig. 19). Ein Weiterdrehen des Hohlrads 142 führt dazu, dass die Kulissenbahn 288 nicht mehr auf den Tastkopf 286 wirkt und somit eine Bewegung desselben in Richtung weg von dem Flansch 104 zulässt, wie in Fig. 19 und Fig. 20 dargestellt, so dass die Ruhestellungsrasteinrichtung 270 aktiviert wird, ohne dass bereits eine Drehung des Betätigungskörper 52 der Drehblockiereinrichtung 50 erfolgt.

Anschließend erfolgt dann, wie in Fig. 21 bis 22 dargestellt, über die Antriebsschlitze 156 und die Antriebsfinger 158 ein Verdrehen der Antriebshülse 122, die über die Fortsätze 124 mit dem Betätigungskörper 52 drehfest verbunden ist.

Dadurch wird durch das Hohlrad 142 der Betätigungskörper 52 aus der Drehblockierstellung heraus in Richtung seiner Lösestellung verdreht, und zwar so weit bis die Lösestellung erreicht ist.

Da bei Erreichen der Lösestellung des Betätigungskörpers 52 eine Drehbewegung des Schwenklagerkörpers 14 möglich ist und außerdem die Drehbewegung des Betätigungskörpers 52 in Drehrichtung 72 aufgrund der Einwirkung des Hohlrads 142 verhindert ist, bleibt das Hohlrad 142 des Verteilgetriebes 130 stehen, während sich nunmehr der Planetenradträger 146 dreht, der über die Schwenkantriebswelle 100 und den Antriebskörper 194 mit den Antriebsarmen 196 in der Lage ist, den Schwenklagerkörper 14 um die Schwenkachse 22 in Richtung der Ruhestellung R zu verschwenken.

Bei Erreichen der Ruhestellung R wird die Ruhestellungsrastvorrichtung 270 aktiv, nämlich dadurch, dass der Rastkörper 274 in der Lage ist, in die Rastbohrung 282 einzugreifen und den Tastkörper 254 mit dem Betätigungsstift 294 in Richtung der Kulissenbahn 288 zu verschieben.

Damit erfolgt eine Verrastung des Schwenklagerkörpers 14 in der Ruhestellung R des Kugelhalses 10 entsprechenden Drehstellung durch die Ruhestellungsrastvorrichtung 270.

In dieser Ruhestellung erfolgt nun ein Abschalten der Antriebseinheit.

Soll nun ein Zurückschwenken des Kugelhalses 10 von der Ruhestellung R in die Arbeitsstellung A erfolgen, so wird die Antriebseinheit mit umgekehrter Drehrichtung betrieben.

Da ein Verschwenken des Schwenklagerkörpers 214 aufgrund der aktiven Ruhestellungsrasteinrichtung 270 nicht möglich ist treibt das Verteilgetriebe 130 das Hohlrad 142 in der Drehrichtung 312 an, welches, wie in Fig. 23 dargestellt mit der Kulissenbahn 288 auf den Betätigungsstift 294 einwirkt, so dass dieser die Ruhestellungsrasteinrichtung 270 deaktiviert.

Da eine Verdrehung des Betätigungskörpers 52 aufgrund der wirksamen Blockierflächen 90 nicht möglich ist, bewirkt das Verteilgetriebe 130 eine Drehbewegung des Planetenradträgers 152 der über die Schwenkantriebswelle 100 den Antriebskörper 194 mit den Antriebsarmen 196 antreibt und ein Verschwenken des Schwenklagerkörpers 14 mit Verschwenken des Kugelhalses 10 in Richtung der Arbeitsstellung A bewirkt.

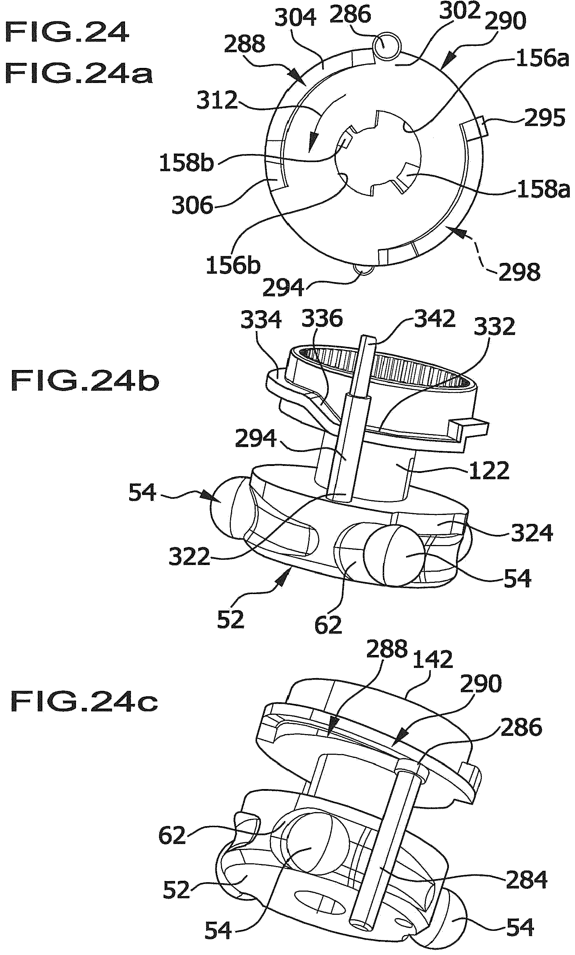

Bei Erreichen der Arbeitsstellung A entfällt in der beschriebenen Art und Weise, wie beispielsweise in Fig. 20 dargestellt, die Blockierung des Betätigungskörpers 52 zur Bewegung in der Drehrichtung 72 unter Einwirkung der Drehfeder 114 in Richtung der Drehblockierstellung, wobei die Drehblockierkörper 54 durch den Betätigungskörper 52 radial zur Schwenkachse 22 nach außen in die Aufnahmen 60 gedrückt werden und somit wiederum zu einer Drehblockierung des Schwenklagerkörpers 14 relativ zum Führungskörper 40 führen (Fig. 24).

In dieser verriegelten Stellung des Schwenklagerkörpers 14 relativ zum Führungskörpers 40 ist wiederum eine Drehbewegung des Planetenradträgers 152 blockiert, so dass das Hohlrad 142 weitergedreht wird, und zwar in die in Fig. 18 dargestellte Ausgangsstellung, in welcher der Betätigungskörper 52 eine weitere Drehbewegung in der Drehrichtung 72 unter Einwirkung der Drehfeder 114 ausführen kann, so dass das Hohlrad 142 in der Arbeitsstellung A ein Nachstellen durch weiterdrehen des Betätigungskörpers 52 in der Drehrichtung 72 unter Einwirkung der Drehfeder 114 nicht behindert.

Ferner wird nach dem Übergang des Betätigungskörpers 52 in die Drehblockierstellung die Sicherungseinrichtung 330 wirksam, so dass der Sicherungsstift 294 mit dem Sicherungskörper 322 in die Sicherungsausnehmung 324 des Betätigungskörpers 52 eingreift und diesen gegen einen Übergang in die Lösestellung sichert.

Der von dem Fortsatz 342 des Sicherungsstifts 294 betätigbare Taster 344 ist Teil eines auf einem Sensorträger 360 angeordneten mechanischen oder elektronischen Tastschalters 362.

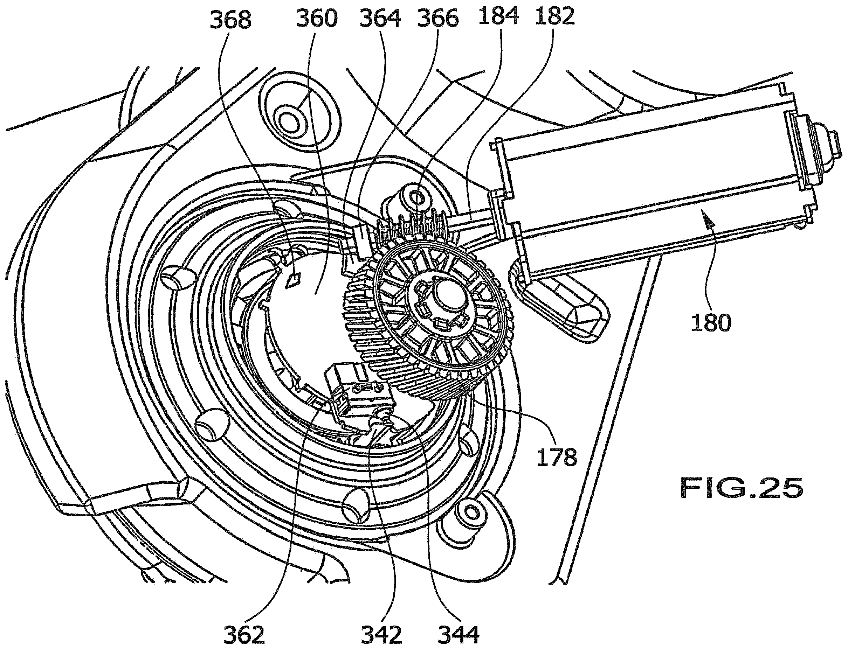

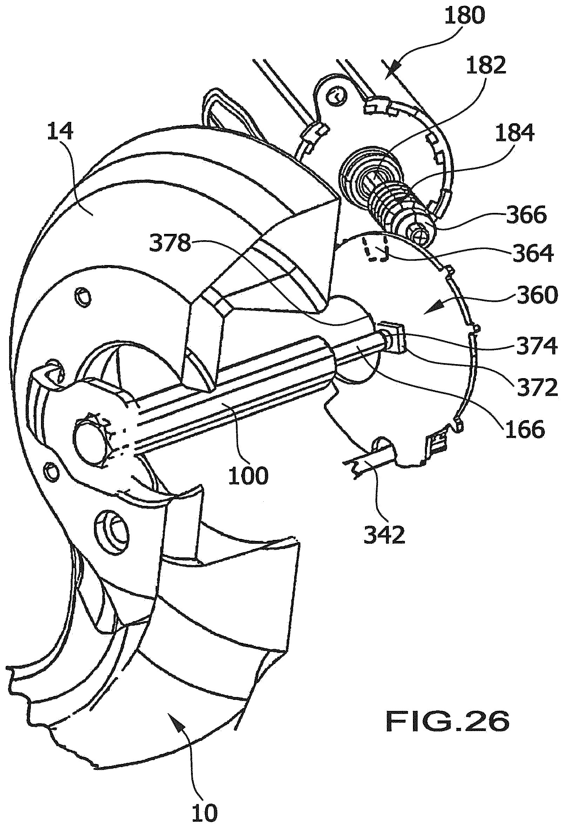

Ferner ist auf dem Sensorträger 360, wie in Fig. 25 und 26 dargestellt, noch ein Drehzahlsensor 364 angeordnet, welcher eine Drehzahl eines auf der Abtriebswelle 182 des Antriebsmotors 180 angeordneten Magnets 366 detektiert, um somit die Drehzahl der Abtriebswelle 182 des Antriebsmotors 180 unmittelbar zu erfassen.

Zusätzlich ist auf dem Sensorträger 360 noch ein Temperatursensor 368 zur Erfassung der Temperatur in der Schwenkeinheit S vorgesehen.

Darüber hinaus dient der Sensorträger 360, wie in Fig. 26 dargestellt, auch zur Aufnahme eines Schwenkbewegungssensors 372, welcher eine Drehlage der Schwenkantriebswelle 100 und somit des Schwenklagerkörpers 14, der mit dem Kugelhals 10 unmittelbar verbunden ist, dadurch erfasst, dass an dem Wellenstummel 166 der Schwenkantriebswelle 100 endseitig ein Magnet 374 angeordnet ist. Somit sind auf dem Sensorträger 360 insgesamt sowohl der Tastschalter 362 mit dem Taster 344, der Drehzahlsensor 364 und der Schwenkbewegungssensor 372 angeordnet.

Der Sensorträger 360 liegt dabei wie in Fig. 6 und 7 dargestellt, zwischen dem Hohlrad 172 und dem Schneckenrad 178 des Untersetzungsgetriebes 170, wobei ein das Schneckenrad 178 mit dem Ritzel 176 unmittelbar direkt verbindendes Verbindungsstück 376 einen Durchbruch 378 des Sensorträgers 360 durchsetzt.

Dadurch, dass der Sensorträger 360 in dem Untersetzungsgetriebe 170 integriert angeordnet ist, besteht die Möglichkeit, sowohl den Tastschalter 362 als auch den Drehzahlsensor 364, den Schwenkbewegungssensor 372 und den Temperatursensor 368 auf einem einzigen Sensorträger 360 anzuordnen und somit durch die Sensoren auf diesem Sensorträger 360 die Funktion der Drehblockiereinrichtung 50, die Drehzahl des Antriebsmotors 180 und die Schwenklage des Kugelhalses 10 um die Schwenkachse 22 einfach zu erfassen und die von den Sensoren, dem Funktionssensor 362, dem Drehzahlsensor 364 und dem Schwenkbewegungssensor 372 gelieferten Werte in einfacher Weise an eine Steuerung 380 für die Funktionen der Schwenkeinheit S weiterzuleiten.

Besonders vorteilhaft ist es dabei, dass sich der Sensorträger 360 quer, insbesondere senkrecht zur Schwenkachse 22 erstreckt und dabei raumsparend in die Schwenkeinheit S, insbesondere das Untersetzungsgetriebe 170 integriert werden kann, so dass die Daten aller Sensoren bereits antriebsseitig des Verteilgetriebes 130 und abtriebsseitig des Antriebsmotors 180 erfasst werden können.

Bezüglich der Anordnung der Schwenksteuereinheit 380 bestehen bei der erfindungsgemäßen Lösung die unterschiedlichsten Möglichkeiten.

Prinzipiell wäre es denkbar, die Schwenksteuereinheit 380 in einem separaten Gehäuse anzuordnen.

Eine vorteilhafte Lösung sieht jedoch vor, dass die Schwenksteuereinheit 380 in einem Gesamtgehäuse 400 der Schwenkeinheit integriert ist.

Das Gesamtgehäuse 400 umschließt dabei, wie in den Fig. 6 und 7 dargestellt ist, die Schwenklagereinheit 20, die Drehblockiereinheit 50 sowie das Verteilgetriebe 130 und das Untersetzungsgetriebe 170, die in einem Schwenkbetriebsgehäuseabschnitt 402 angeordnet sind, der insbesondere teilweise durch den Führungskörper 40 gebildet ist, welcher fest mit der fahrzeugfesten Tragplatte 26 verbunden ist.

Der Führungskörper 40 wird dabei einerseits an der mit dem Flansch 104 versehenen Seite von dem Schwenklagerkörper 14 übergriffen und abgedeckt und außerdem auf seiner dem Flansch 104 gegenüberliegenden Seite durch einen ebenfalls Teil des Schwenkbetriebsgehäuseabschnitts 402 bildenden Trägerkörper 404 teilweise abgedeckt, wobei der Trägerkörper 404, wie in Fig. 6 und 7 dargestellt, das Untersetzungsgetriebe 170 mit dem Sensorträger 360 aufnimmt und lagert und außerdem eine Aufnahme 406 für den Antriebsmotor 180 bildet.

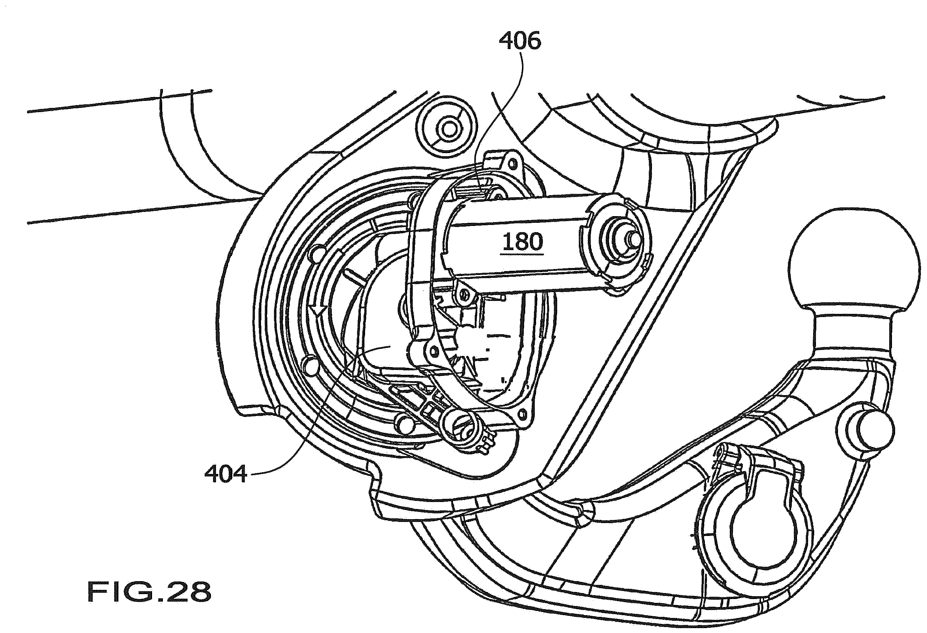

Ferner bildet der Trägerkörper 404, wie ebenfalls in Fig. 28 erkennbar, eine Aufnahme für einen Motorgehäuseabschnitt 408 des Gesamtgehäuses 400.

Bei einer ersten Ausführungsvariante der erfindungsgemäßen Schwenkeinheit S ist die Schwenksteuereinheit 380 integriert auf dem Sensorträger 360 angeordnet, so dass beispielsweise der Sensorträger 360 gleichzeitig eine Schaltungsplatine 382 für eine Steuerschaltung 384 darstellt, die beispielsweise als Datenverarbeitungseinheit einen Prozessor 386 und eine Motorantriebsschaltung 388 trägt.

Der Antriebsmotor 180 ist dabei beispielsweise über einen Anschluss 392 mit seiner Anschlussleitung 394 verbunden.

Außerdem trägt die Schaltungsplatine 382 in diesem Fall insgesamt drei Stecckontaktstifte 396, wobei zwei der Steckkontaktstifte 396 für die Zufuhr der Versorgungsspannung +, - vorgesehen sind und einer der Steckkontaktstifte 396 für einen Anschluss an ein BUS-System des Fahrzeugs.

Somit lässt sich die gesamte Schwenkeinheit S in all ihren Funktionen gesteuert über den BUS-Anschluss B steuern, wobei die gesamte Schwenksteuereinheit 380 in dem Schwenkbetriebsgehäuseabschnitt 402 integriert ist und insbesondere antriebsseitig des Verteilgetriebes 130 angeordnet ist, vorzugsweise integriert in das Untersetzungsgetriebe 170.

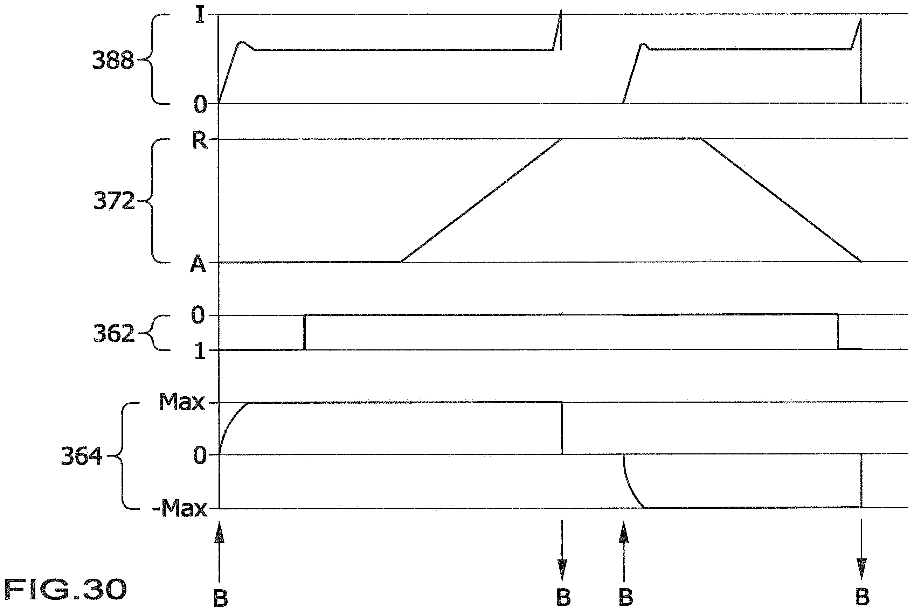

Die erfindungsgemäße Schwenksteuereinheit 380 arbeitet beispielsweise wie in Fig. 30 schematisch dargestellt.

Kommt über den BUS-Anschluss B seitens des BUS-Systems ein Signal zum Start der Verschwenkbewegung des Kugelhalses 10 von der Arbeitsstellung A in die Ruhestellung R, so wird seitens der Schwenksteuereinheit 380 und durch den Prozessor 386 und die Motorantriebsschaltung 388 der Antriebsmotor 180 eingeschaltet und beginnt die Abtriebswelle 182 mit der Schnecke 184 anzutreiben.

Dies führt zunächst zu keiner Bewegung des Schwenklagerkörpers 14, da dieser durch die Drehblockiereinrichtung 50 drehblockiert ist, da, wie in Fig. 18 dargestellt, der Betätigungskörper 52 die Drehblockierkörper 54 in der Führungsrichtung 58 radial soweit nach außen bewegt hat, dass diese in die Aufnahmen 60 eingreifen.

Die Schnecke 184 treibt jedoch das Untersetzungsgetriebe 170 an und dieses treibt das Sonnenrad 162.

Dabei erkennt der Prozessor 386 über den Drehzahlsensor 364 ein die Drehzahl des Antriebsmotors 180 repräsentierendes Signal.

Durch das Sonnenrad 162 werden die Planetenräder 146 angetrieben, die sich jedoch selbst nicht um die Schwenkachse 22 drehen, da der Schwenklagerkörper 14 hinsichtlich der Drehbewegung nach wie vor blockiert ist, so dass daraus ein Antrieb des Hohlrades 142 resultiert, das sich dann, wie in Fig. 18 durch die Drehrichtung 292 angegeben, verdreht und die Sicherungseinrichtung 330 betätigt, wodurch der Sicherungsstift 294 verschoben wird, wie in Fig. 19 und 20 dargestellt.

Dadurch wird die Verdrehsicherung des Betätigungskörpers 52 gelöst und durch Bewegen des Sicherungsstifts 294 wird der Tastkörper 344 betätigt, was über den Tastschalter 362 erkannt wird, wodurch dieser das Signal null liefert, das dem Lösen der Sicherungseinrichtung 330 entspricht.

Nach Lösen der Sicherungseinrichtung 330 erfolgt, wie in Fig. 21 und 22 dargestellt, über die Antriebsschlitze 156 und die Antriebsfinger 158 ein Verdrehen der Antriebshülse 122, die mit den Fortsätzen 124 mit dem Betätigungskörper 52 verbunden ist und somit ein Verdrehen des Betätigungskörpers 52 angetrieben durch das Hohlrad 142 der Verteilgetriebes 130, so dass der Betätigungskörper 52 sich aus der Drehblockierstellung heraus bewegt und wie in Fig. 21 dargestellt, nunmehr die Drehblockierkörper 54 die Möglichkeit haben, bei Erreichen der Lösestellung die Drehblockierung des Schwenklagerkörpers 14 freizugeben.

In der Lösestellung des Betätigungskörpers 52 ist dessen Drehbewegung blockiert, so dass das Hohlrad 142 des Verteilgetriebes 130 stehen bleibt und nunmehr das Verteilgetriebe 130 den Planetenradträger 146 und damit die Schwenkantriebswelle 100 zu drehen beginnt und somit auch der Schwenklagerkörper zu drehen beginnt, wobei diese Drehbewegung des Schwenklagerkörpers 14 durch den Schwenkbewegungssensor 372 erfasst wird, der dann den Verlauf der Schwenkbewegung des Kugelhalses 10 von der Arbeitsstellung A in die Ruhestellung R detektiert, wie in Fig. 30 dargestellt.

Das Erreichen der Ruhestellung R kann dabei in unterschiedlichster Art und Weise durch die Steuerschaltung 384 erfasst werden.

Es besteht entweder die Möglichkeit, das vom Schwenkbewegungssensor 372 empfangene Signal, zum Erfassen der Ruhestellung R einzusetzen oder über die Motorantriebsschaltung 388 den bei Erreichen der Ruhestellung und Wirksamwerden der Ruhestellungsrasteinrichtung 270 auftretenden starken Anstieg des Stroms I zur Versorgung des Antriebsmotors 180 zu erfassen und dies zum Anlass zu nehmen, den Antriebsmotor 180 abzuschalten.

Somit kann der Prozessor 386 erkennen, dass die Ruhestellung erreicht ist.

Um über den Anschluss B an das BUS-System zurückzumelden, dass die Ruhestellung R durch den Kugelhals erreicht wird, zieht der Prozessor 386 beispielsweise den Stromanstieg heran, der über die Motorantriebsschaltung 388 detektiert wurde, und/oder das Signal des Schwenkbewegungssensors 372, das das Erreichen der Ruhestellung R meldet, heran.

Alternativ dazu besteht auch die Möglichkeit, der Ruhestellungsrasteinrichtung 270 einen Sensor zuzuordnen, der das Wirksamwerden der Ruhestellungsrasteinrichtung 270 erfasst.

Beim Zurückschwenken des Kugelhalses 10 von der Ruhestellung R in die Arbeitsstellung A, gestartet wiederum durch ein über das BUS-System kommendes Startsignal am Anschluss B, erkennt die Steuerschaltung 384 zunächst mittels des Schwenkbewegungssensors 372, dass der Kugelhals 10 in der Ruhestellung R steht.

In diesem Fall wird ebenfalls der Antriebsmotor 182 allerdings mit umgekehrter Drehrichtung gestartet.

Da ein Verschwenken des Schwenklagerkörpers 14 aufgrund der aktiven Ruhestellungsrasteinrichtung 270 nicht möglich ist, treibt das Verteilgetriebe 130 das Hohlrad 142 in der umgekehrten Drehrichtung 312 an, wie in Fig. 23 und 24 dargestellt.

Dies führt dazu, dass zunächst ohne eine Drehbewegung des Kugelhalses 10 die Ruhestellungsrasteinrichtung 270 deaktiviert wird, und zwar durch Verdrehen des Hohlrads 142, das die Kulissenbahn 288 trägt.

Ferner ist eine Verdrehung des Betätigungskörpers 52 beispielsweise aufgrund der wirksamen Blockierflächen 90 ebenfalls blockiert, so dass das Verteilgetriebe 130 nach dem Lösen der Ruhestellungsrasteinrichtung 270 eine Drehbewegung des Planetenradträgers 152 über die Schwenkantriebswelle 100 und somit auch des Kugelhalses 10 in Richtung der Arbeitsstellung A bewirkt.

Wie in Fig. 24 dargestellt, entfällt kurz vor Erreichen der Arbeitsstellung A die Blockierung des Betätigungskörpers 52, so dass dieser unter der Einwirkung der Drehfeder 114 in die Drehblockierstellung übergeht und, wie in Fig. 24 ebenfalls dargestellt, auch kurz vor Erreichen der Arbeitsstellung A die Sicherungseinrichtung 330 wiederum in die in der Arbeitsstellung A den Betätigungskörper 52 in der Drehblockierstellung sichernden Stellung übergeht, was ebenfalls von dem Tastschalter 362 erkannt wird.

In der Arbeitsstellung A kann nun in gleicher Weise wie in der Ruhestellung R die Abschaltung des Antriebsmotors 180 seitens der Steuerschaltung 384 dadurch erfolgen, dass der Prozessor 386 über die Motorantriebsschaltung 388 den Strom für den Antriebsmotor 180 erfasst und aufgrund des Anstiegs das Erreichen der Arbeitsstellung erkennt.

Es besteht aber auch die Möglichkeit, mittels des Prozessors 386 den Schwenkbewegungssensor 372 abzufragen und die der Arbeitsstellung A entsprechende Drehstellung zu erkennen und zum Anlass zu nehmen, den Antriebsmotor 180 abzuschalten.

Um nun dem BUS-System über den Anschluss B die Nachricht zu vermitteln, dass der Kugelhals 10 die Arbeitsstellung A sicher erreicht hat, wird beispielsweise die Information des Schwenkbewegungssensors 372 und/oder das Signal des Tastschalters 362 herangezogen und gegebenenfalls auch noch der von der Motorantriebsschaltung 388 detektierte Stromanstieg beim Erreichen der Arbeitsstellung A.

In der erfindungsgemäßen Steuerschaltung 384 können aber auch noch weitere Funktionen ausgeführt werden.

Beispielsweise kann die Steuerschaltung 384 eine Störung der Schwenkbewegung des Kugelhalses 10 über den Schwenkbewegungssensor 372 erkennen und insbesondere gegebenenfalls durch Vergleich mit dem Signal des Tastschalters 362 und/oder auch in Verbindung mit der Stromaufnahme, erfasst über die Motorantriebsschaltung 388, erkennen, dass der Kugelhals 10 bereits verschwenkt wurde und ob der Kugelhals 10 gegebenenfalls gegen einen Widerstand, also ein Objekt, gestoßen ist.

In diesem Fall ist der Prozessor 386 beispielsweise so programmiert, dass er die Stromversorgung zum Antriebsmotor 180 invertiert und den Kugelhals in entgegengesetzter Richtung, insbesondere in die Ausgangsstellung, das heißt entweder in die Arbeitsstellung A oder in die Ruhestellung R, zurückbewegt.

Darüber hinaus besteht unter Berücksichtigung der durch den Schwenkbewegungssensor 372 erfassten Lage des Kugelhalses 10 relativ zur Arbeitsstellung A oder zur Ruhestellung R noch die Möglichkeit, den Verlauf der Schwenkbewegung des Kugelhalses 10 selbst vorzugeben, beispielsweise durch eine zunehmende Winkelgeschwindigkeit unmittelbar nach dem Start der Schwenkbewegung, eine konstante Winkelgeschwindigkeit in den Bewegungsphasen zwischen der Arbeitsstellung A und der Ruhestellung R und eine abnehmende Winkelgeschwindigkeit kurz vor Erreichen der Arbeitsstellung oder der Ruhestellung, so dass dadurch die mechanische Belastung und auch beispielsweise die Geräuschbelastung bei Erreichen der Arbeitsstellung oder Ruhestellung reduziert werden kann.

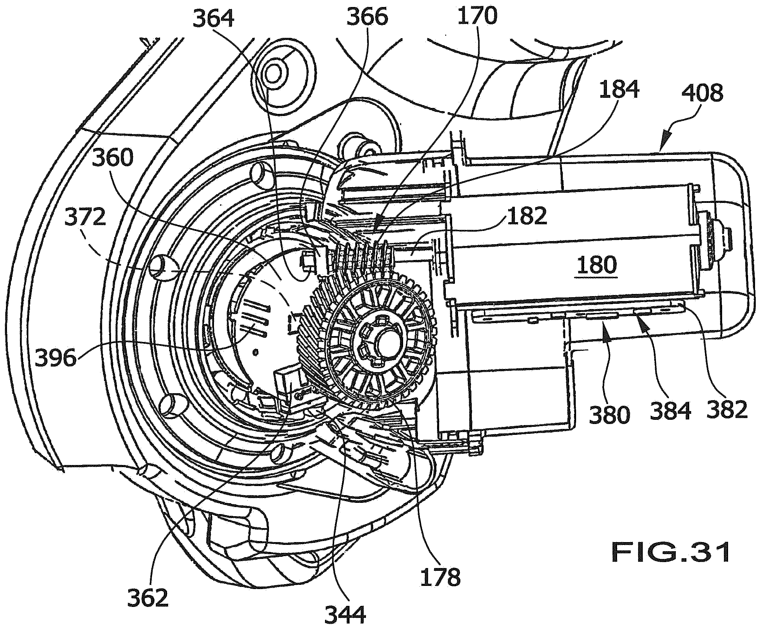

Bei einer zweiten Ausführungsvariante der erfindungsgemäßen Schwenkeinheit S, dargestellt in Fig. 31, ist vorgesehen, dass der Sensorträger 360 als solcher wie beim ersten Ausführungsbeispiel beschrieben, im Bereich des Untersetzungsgetriebes 170 angeordnet verbleibt und insbesondere den Tastschalter 362, den Drehzahlsensor 364 und den Schwenkbewegungssensor 372 trägt.

In diesem Fall ist dann die Schwenksteuereinheit 380, umfassend die mit der Steuerschaltung 384 versehene Schaltungsplatine 382 in einem Motorgehäuseabschnitt 408 des Gesamtgehäuses 400 angeordnet und beispielsweise direkt am Antriebsmotor 180 gehalten.

In diesem Fall erfolgt eine Verbindung mit dem Sensorträger 360 und dem auf diesem angeordneten Tastschalter 362, dem Drehzahlsensor 364 und dem Schwenkbewegungssensor 372 mittels einer Leitung 412.

Dabei bleiben die Funktionen der Schwenksteuereinheit 380 dieselben, wie sie im Zusammenhang mit der ersten Ausführungsvariante beschrieben wurden.

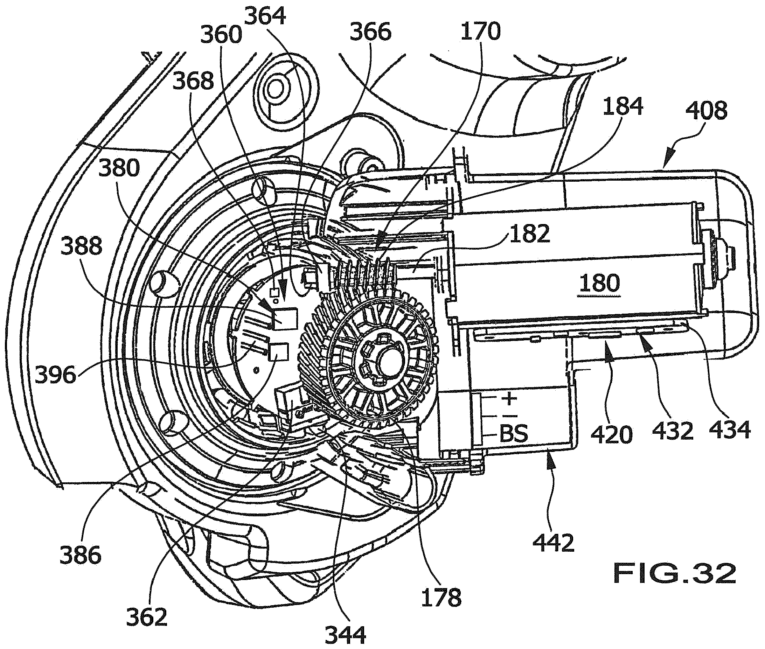

Bei einer dritten Ausführungsvariante, dargestellt in Fig. 32, ist die Schwenksteuereinheit 380 in gleicher Weise wie bei der ersten Ausführungsvariante auf dem Sensorträger 360 angeordnet, wobei im Motorgehäuseabschnitt 408, beispielsweise gehalten von dem Trägerkörper 404, noch zusätzlich eine Steckdosensteuereinheit 420 angeordnet ist, die dazu dient, die einzelnen Kontakte 422 der am Kugelhals angeordneten Steckdose 34 anzusteuern.

Die einzelnen Kontakte 422 einer üblichen Steckdose 34 für einen Anhänger oder eine an dem Kugelhals 10 zu befestigenden Trägereinheit umfassen beispielsweise Beleuchtungskontakte 424 für Licht links/rechts, Blinker links/rechts, Nebelschlussleuchte, Bremslicht und Rückfahrleuchte sowie mindestens einen Masseanschluss für alle Beleuchtungseinheiten.

Zusätzlich umfassen die Kontakte 422 noch Verbraucherkontakte 426, wie beispielsweise Dauerplus, eine Ladeleitung für eine Batterie und zusätzliche Massekontakte für derartige Verbraucher.

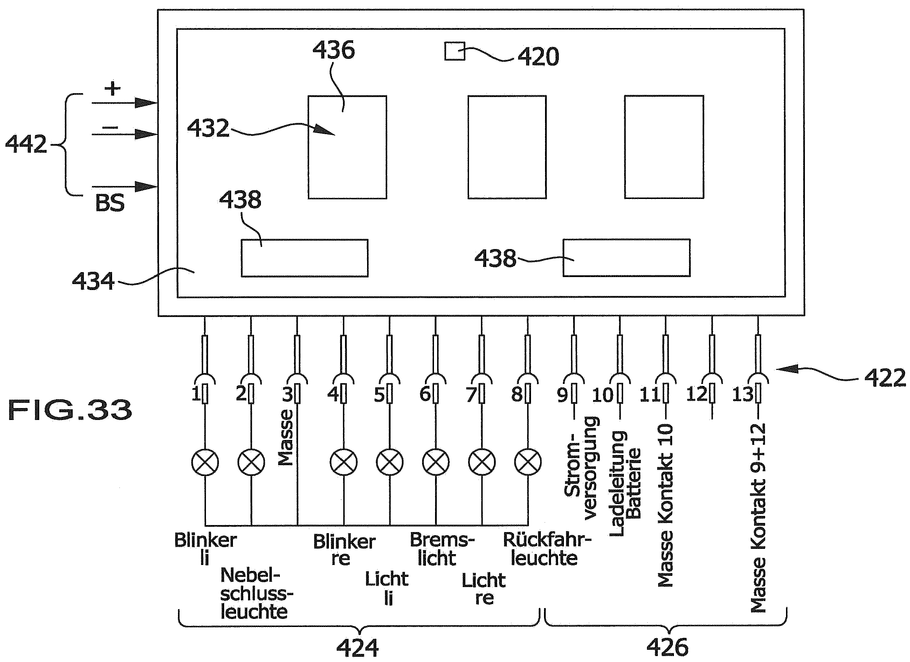

Die Steckdosensteuereinheit 420 umfasst eine Steckdosensteuerschaltung 432, angeordnet auf einer Steckdosensteuerplatine 434, welche mindestens einen Prozessor 436 und einen oder mehrere Kontaktsteuerschaltungen 438 umfasst (Fig. 33).

Ferner ist die Steckdosensteuerschaltung 432 mit Anschlüssen 442 versehen, umfassend zwei Versorgungsanschlüsse +, - sowie einen Busanschluss BS, über welchen über ein BUS-System übermittelte Funktionssignale eingehen.

Entsprechend den am Busanschluss BS eingehenden Funktionssignalen agiert der Prozessor 436 der Steckdosensteuerschaltung 432 wie folgt.

Sobald ein am BUS-Anschluss eingehendes Funktionssignal einen Betriebszustand des Fahrzeugs meldet, überwacht der Prozessor 436 mittels der Kontaktsteuerschaltungen 438 permanent die Beleuchtungskontakte 424 durch Prüfen des Widerstands zwischen den verschiedenen Beleuchtungskontakten 424 und der Masse der mit diesen verbundenen Leuchtmittel.

Stellt der Prozessor 436 bei der permanenten Überwachung der Leuchtmittel fest, dass eines oder einige einen außerhalb der üblichen Betriebsbedingungen liegenden Durchlasswiderstand aufweisen, so generiert der Prozessor 436 eine Rückmeldung an dem Anschluss BS für das BUS-System.

Sollen gemäß den eingehenden Funktionssignalen einzelne Leuchtmittel angesteuert werden, beispielsweise Blinker links oder rechts oder Licht links oder rechts etc., so veranlasst der Prozessor 436 über die Kontaktsteuerschaltung 438 eine Bestromung dieser Leuchtmittel und überwacht aber gleichzeitig die Stromaufnahme dieser Leuchtmittel, um beispielsweise einen Kurzschluss zu erkennen.

Stellt der Prozessor 436 einen störungsfreien Betrieb der Leuchtmittel fest, generiert der Prozessor 436 eine entsprechende Rückmeldung am Busanschluss BS auf das BUS-System.

In gleicher Weise überwacht der Prozessor die Verbraucherkontakte 436 dahingehend, ob überhaupt ein Verbraucher angeschlossen ist und dann inwieweit der Verbraucher funktionsfähig ist und generiert eine entsprechende Rückmeldung am BUS-Anschluss BS für das BUS-System.

Grundsätzlich können die erfindungsgemäße Steckdosensteuereinheit 420 und die erfindungsgemäße Schwenksteuereinheit 380 gemeinsam über einen Busanschluss, beispielsweise den BUS-Anschluss BS der Schwenksteckdosensteuereinheit 420, mit einem BUS-System des Fahrzeugs, beispielsweise einem Can-Bus kommunizieren.

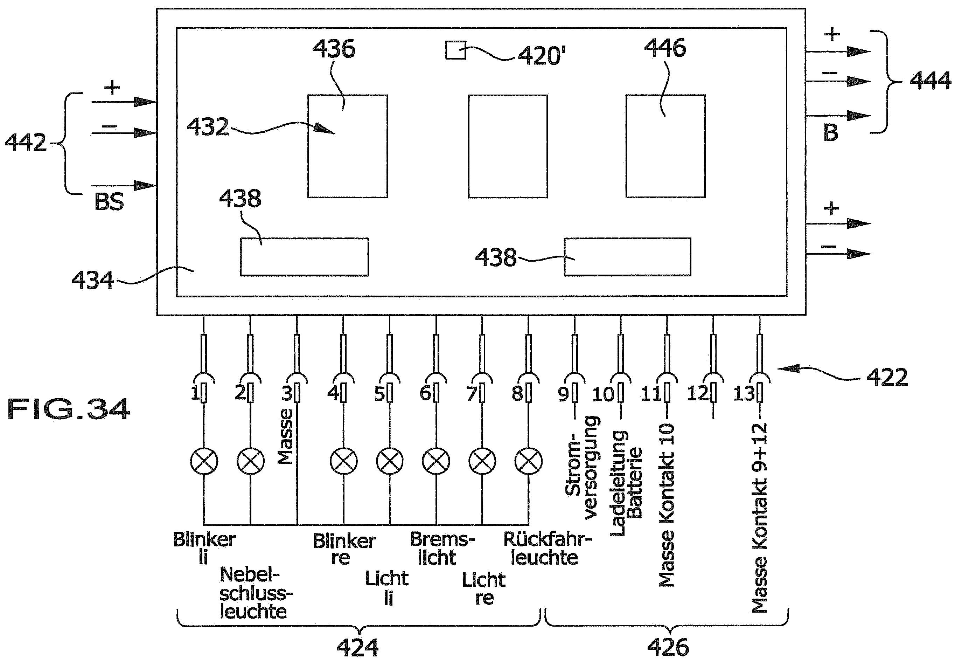

Alternativ dazu besteht aber auch, wie bei einer vierten Ausführungsvariante gemäß Fig. 34 dargestellt, die Möglichkeit, dass die Steckdosensteuereinheit 420' über den BUS-Anschluss BS mit dem Fahrzeugbus, beispielsweise dem Can-BUS des Fahrzeugs mit diesem kommuniziert und dass die Schwenksteuereinheit 380, wie in Fig. 34 dargestellt, über separate Anschlüsse 444, umfassend ebenfalls Versorgungsanschlüsse + und - sowie einen BUS-Anschluss B mit der Schwenksteuereinheit 380 kommuniziert, um die Schwenkbewegungen zu steuern.

In diesem Fall ist beispielsweise die Steckdosensteuereinheit 420' über den BUS-Anschluss BS mit dem Can-BUS des Fahrzeugs verbunden, während die Steckdosensteuereinheit 420' durch die Anschlüsse 444, umfassend Versorgungsanschlüsse +, - und den BUS-Anschluss B, der über einen Lin-Bus mit dem BUS-Anschluss B mit der Schwenksteuereinheit 380 kommuniziert, wobei die Anschlüsse 444 mit den Anschlüssen 396 der Schwenksteuereinheit 380 verbunden sind.

In diesem Fall funktioniert die Steckdosensteuereinheit 420 in gleicher Weise wie bei der dritten Ausführungsvariante beschrieben, weist allerdings noch einen Prozessor 446 zur Kommunikation über das Lin-BUS-System mit der Schwenksteuereinheit 380 auf.

Dabei übermittelt der Prozessor 446 die am BUS-Anschluss BS, insbesondere vom Can-BUS-System, übermittelten Signale an die Schwenksteuereinheit 380 und überträgt auch die von der Schwenksteuereinheit 380 über den Lin-BUS kommenden Rückmeldungen auf den Busanschluss BS des Can-BUS-Systems.

Im Übrigen funktioniert diese vierte Ausführungsvariante in gleicher Weise wie im Zusammenhang mit den voranstehenden Ausführungsbeispielen beschrieben, so dass auf die Ausführungen zu diesen voranstehenden Ausführungsbeispielen vollinhaltlich Bezug genommen werden kann.

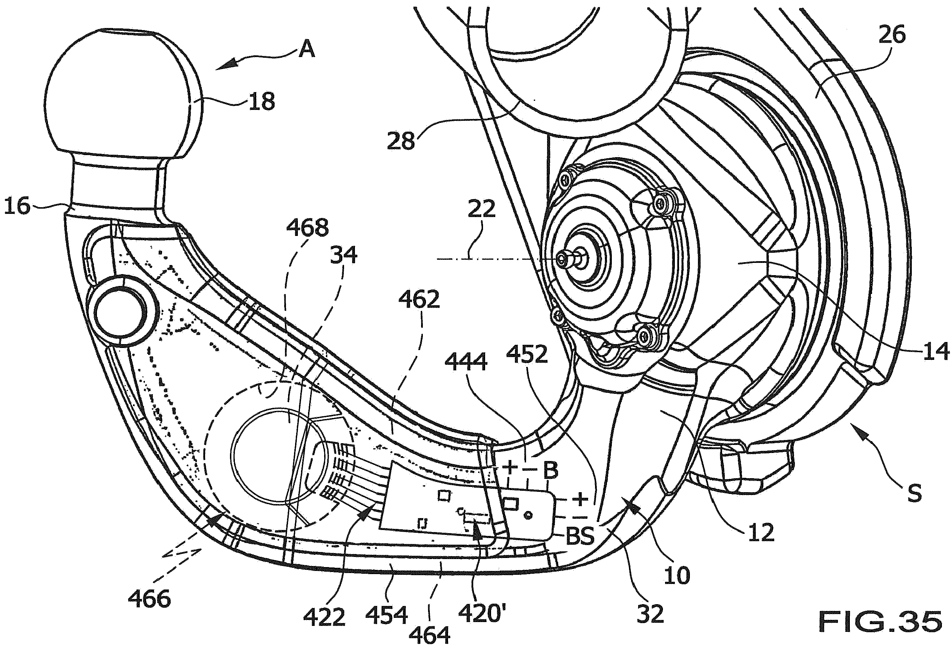

Bei einer fünften Ausführungsvariante, dargestellt in Fig. 35 ist die Schwenkeinheit S in gleicher Weise ausgebildet wie im Zusammenhang mit den vorausgehenden Ausführungsbeispielen beschrieben.

Insbesondere ist auch die Schwenksteuereinheit 380 in gleicher Weise in der Schwenkeinheit S angeordnet, wie im Zusammenhang mit den voranstehenden Ausführungsvarianten beschrieben, und arbeitet ebenfalls in gleicher Weise.

Im Gegensatz zu den voranstehenden Ausführungsvarianten ist die Steckdosensteuereinheit 420' nicht in dem Motorgehäuseabschnitt 408 angeordnet, sondern am Kugelhals 10 und zwar im Bereich des an das erste Ende 12 anschließenden Abschnitts 32 des Kugelhalses 10, und zwar zwischen dem ersten Ende 12 und der Steckdose 34 (Fig. 35).

Insbesondere ist hierzu in dem Kugelhals 10 eine Vertiefung 452 vorgesehen, welche die Steckdosensteuereinheit 420' aufnimmt, so dass die Steckdosensteuereinheit 420' insbesondere gegen äußere Einwirkungen auf den Kugelhals 10 geschützt in der Vertiefung 452 neben der Steckdose 34 angeordnet ist.

Beispielsweise liegt die Vertiefung 452 dadurch vor, dass der Kugelhals 10 durch eine Tragstruktur 466 mit einer oberen Längsstrebe 462 und einer unteren Längsstrebe 464 gebildet ist, zwischen denen die Vertiefung 452 angeordnet ist.

Außerdem bildet die Tragstruktur 466 vorzugsweise auch noch eine Steckdosenaufnahme 468, in welche die Steckdose 34 eingesetzt ist.

Damit lassen sich insbesondere die Kontaktanschlüsse 422 für die Beleuchtungskontakte 424 und die Verbraucherkontakte 426 in einfacher Weise mit den in der Steckdose 34 angeordneten entsprechenden Kontakten verbinden.

Ferner ist die Steckdosensteuereinheit 420' über den BUS-Anschluss BS mit dem Fahrzeug-BUS-System verbunden und ebenfalls über die Versorgungskontakte +, -.

Darüber hinaus erfolgt eine Verbindung zur Schwenksteuereinheit 380 über die Anschlüsse 444, wie in Zusammenhang mit dem vierten Ausführungsbeispiel erläutert.

Die gesamten Funktionen der Steckdosensteuereinheit 420' entsprechen dabei den im Zusammenhang mit dem dritten und vierten Ausführungseispiel beschriebenen Funktionen der Steckdosensteuereinheit 420'.

Vorzugsweise ist zum besonderen Schutz der Steckdosensteuereinheit 420' bei diesem Ausführungsbeispiel der Kugelhals 10 noch mit einer Abdeckung 454 versehen, welche die Vertiefung 452 zumindest teilweise, vorzugsweise ganz, übergreift und somit noch einen zusätzlichen Schutz für die Steckdosensteuereinheit 420' in der Vertiefung 452 bietet, insbesondere auch einen zusätzlichen Schutz für die Verbindung zwischen den Kontakten der Steckdose 34 und den Kontaktanschlüssen 422 der Steckdosensteuereinheit 420'.

## Patentansprüche

1. Anhängekupplung, umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine fahrzeugfest angeordnete Schwenkeinheit (S), mittels welcher der Schwenklagerkörper (14) zur Ausführung einer Schwenkbewegung um eine Schwenkachse (22) zwischen einer Arbeitsstellung (A) und einer Ruhestellung (R) verschwenkbar ist, wobei die Schwenkeinheit (S) eine fahrzeugfeste Schwenklagereinheit (20) und eine Drehblockiereinrichtung (50) zum Blockieren einer Schwenkbewegung des Schwenklagerkörpers (14) um die Schwenkachse (22) zumindest in der Arbeitsstellung (A) umfasst,
**dadurch gekennzeichnet, dass** die Anhängekupplung am Kugelhals (10) eine Steckdose (34) aufweist und mit einer Steckdosensteuereinheit (420) versehen ist, welche Kontaktanschlüsse (422) zum Bestromen von Kontakten (424, 426) der Steckdose (34) aufweist, und dass die Steckdosensteuereinheit (420) zur Stromversorgung zwei Versorgungsanschlüsse (+, -) und zur Ansteuerung einen BUS-Anschluss (B) aufweist.

2. Anhängekupplung nach Anspruch 1, **dadurch gekennzeichnet, dass** die Steckdosensteuereinheit (420) eine Steckdosensteuerschaltung (432) mit einem Prozessor (436) und einer Kontaktsteuerschaltung (438) aufweist, dass insbesondere der Prozessor (436) zusammen mit der Kontaktsteuerschaltung (438) die Kontaktanschlüsse (422) überwacht, dass insbesondere der Prozessor (436) mittels der Kontaktsteuerschaltung (438) die Kontaktanschlüsse (422) bei Nichtbestromung im Hinblick auf deren Widerstand gegen Masse überwacht, dass insbesondere der Prozessor (436) bei Abweichungen der Kontaktanschlüsse (422) von einem vorgegebenen Widerstand gegen Masse ein Fehlersignal an den BUS-Anschluss ausgibt.

3. Anhängekupplung nach Anspruch 2, **dadurch gekennzeichnet, dass** der Prozessor (436) mit der Kontaktsteuerschaltung (438) die Kontaktanschlüsse (422) bei Bestromung im Hinblick auf den fließenden Strom überwacht, dass insbesondere der Prozessor (436) mit der Kontaktsteuerschaltung (438) bei Überschreiten eines vorgegebenen Maximalstroms des bestromten Kontaktanschlusses (422) dessen Bestromung abschaltet, dass insbesondere der Prozessor (436) bei Abschalten eines bestromten Kontaktanschlusses (422) ein Fehlersignal am BUS-Anschluss ausgibt.

4. Anhängekupplung nach einem der voranstehenden Ansprüche, **dadurch gekennzeichnet, dass** ein Prozessor (446) der Steckdosensteuereinheit (420) ein bei dieser ankommendes BUS-Signal für eine Schwenksteuereinheit (380) auf einen an der Steckdosensteuereinheit (420) vorgesehenen BUS-Anschluss (444) für eine Schwenksteuereinheit (380) weiterleitet, dass insbesondere der BUS-Anschluss für die Schwenksteuereinheit (380) ein Anschluss eines Lin-BUS ist, und/oder dass insbesondere der Prozessor (446) der Steckdosensteuereinheit (420) ein an seinem BUS-Anschluss (444) für die Schwenksteuereinheit (380) ankommendes BUS-Signal der Schwenksteuereinheit (380) an den BUS-Anschluss für das BUS-System des Fahrzeugs weitergibt.

5. Anhängekupplung nach einem der voranstehenden Ansprüche, **dadurch gekennzeichnet, dass** die Steckdosensteuereinheit (420) in dem Gesamtgehäuse (400) der Schwenkeinheit S angeordnet ist.

6. Anhängekupplung nach Anspruch 5, **dadurch gekennzeichnet, dass** die Steckdosensteuereinheit (420) in dem Schwenkbetriebsgehäuseabschnitt (402) der Schwenkeinheit (S) angeordnet ist.

7. Anhängekupplung nach Anspruch 5 oder 6, **dadurch gekennzeichnet, dass** die Steckdosensteuereinheit (420) in dem Motorgehäuseabschnitt (408) der Schwenkeinheit (S) angeordnet ist.

8. Anhängekupplung nach einem der voranstehenden Ansprüche, **dadurch gekennzeichnet, dass** der Kugelhals (10) eine Aufnahme (452) aufweist, in welcher die Steckdosensteuereinheit (420) für die am Kugelhals (10) gehaltene Steckdose (34) angeordnet ist.

9. Anhängekupplung nach Anspruch 8, **dadurch gekennzeichnet, dass** die Aufnahme (452) als Vertiefung in dem Kugelhals (10) ausgebildet ist, dass insbesondere die Vertiefung (452) zwischen einer oberen (462) und einer unteren Längsstrebe (464) einer Tragstruktur (466) des Kugelhalses (10) angeordnet ist, dass insbesondere die Vertiefung (452) zwischen einem ersten fahrzeugfest fixierbaren Ende (12) und der am Kugelhals (10) angeordneten Steckdose (34) angeordnet ist.

10. Anhängekupplung nach einem der voranstehenden Ansprüche, **dadurch gekennzeichnet, dass** die Steckdose (34) in einer von der Tragstruktur (466) des Kugelhalses (10) gebildeten Steckdosenaufnahme (468) angeordnet ist.

11. Anhängekupplung nach einem der voranstehenden Ansprüche, **dadurch gekennzeichnet, dass** die Steckdosensteuerschaltung (420) durch eine Abdeckung (454) des Kugelhalses (10) überdeckt ist.

12. Anhängekupplung nach einem der voranstehenden Ansprüche, **dadurch gekennzeichnet, dass** in der Schwenkeinheit (S) die Schwenksteuereinheit (380) integriert ist, dass insbesondere die Schwenkeinheit (S) ein Gesamtgehäuse (400) aufweist, in welchem die Schwenklagereinheit (20), die Drehblockiereinrichtung (50) und ein Antriebsmotor (180) angeordnet sind und dass die Schwenksteuereinheit (380) in dem Gesamtgehäuse (400) angeordnet ist.

13. Anhängekupplung nach Anspruch 12, **dadurch gekennzeichnet, dass** die Schwenksteuereinheit (380) die Schwenkbewegungen des Kugelhalses (10) um die Schwenkachse (22) mittels eines Schwenkbewegungssensors (372) erfasst, dass insbesondere der Schwenkbewegungssensor (372) Schwenkbewegungen des Schwenklagerkörpers (14) um die Schwenkachse (22) erfasst, dass insbesondere der Schwenklagerkörper (14) über ein Kopplungselement (100) mit dem Schwenkbewegungssensor (372) zusammenwirkt, dass insbesondere der Schwenkbewegungssensor (372) auf einem Sensorträger (360) angeordnet ist.

14. Anhängekupplung nach einem der Ansprüche 12 oder 13, **dadurch gekennzeichnet**, das die Schwenksteuereinheit (380) Funktionen der Drehblockiereinrichtung (50) mittels eines Funktionssensors (362) erfasst, dass insbesondere die Schwenksteuereinheit (380) mittels des Funktionssensors (362) mindestens eine Stellung der Drehblockiereinrichtung (50) erfasst, dass insbesondere die Schwenksteuereinheit (380) die Stellung der Drehblockiereinrichtung (50) durch Abtasten eines Elements (52) derselben mittels des Funktionssensors (362) erfasst, dass insbesondere der Funktionssensor (362) auf einem Sensorträger (360) angeordnet ist.

15. Anhängekupplung nach einem der Ansprüche 12 bis 14, **dadurch gekennzeichnet, dass** insbesondere die Schwenksteuereinheit (380) eine Drehzahl des Antriebsmotors (180) mittels eines Drehzahlsensors (364) erfasst, dass insbesondere der Drehzahlsensor (364) einer Abtriebswelle (182) des Antriebsmotors (180) zugeordnet ist, dass insbesondere der Drehzahlsensor (364) auf einem Sensorträger (360) angeordnet ist.

16. Anhängekupplung nach einem der Ansprüche 12 bis 15, **dadurch gekennzeichnet, dass** die Schwenksteuereinheit (380) eine Temperatur in der Schwenkeinheit (S) mittels eines Temperatursensors (368) erfasst, dass insbesondere der Temperatursensor (368) auf einem Sensorträger (360) angeordnet ist.

17. Anhängekupplung nach einem der Ansprüche 12 bis 16, **dadurch gekennzeichnet, dass** das Gesamtgehäuse (400) einen die Schwenklagereinheit (20), die Drehblockiereinheit (50) sowie mindestens eine Getriebeeinheit (130, 170) aufnehmenden Schwenkbetriebsgehäuseabschnitt (402) aufweist und dass die Sensorträger (360) dem Schwenkbetriebsgehäuseabschnitt (402) zugeordnet sind, dass insbesondere die Schwenksteuereinheit (380) in dem Schwenkbetriebsgehäuseabschnitt (402) angeordnet sind und dass insbesondere die Sensorträger (360) in dem Schwenkbetriebsgehäuseabschnitt (402) angeordnet sind.

18. Anhängekupplung nach einem der Ansprüche 12 bis 16, **dadurch gekennzeichnet, dass** das Gesamtgehäuse einen den Antriebsmotor (180) aufweisenden Motorgehäuseabschnitt (408) aufweist und dass die auf einer Schaltungsplatine (382) angeordnete Steuerschaltung (384) der Schwenksteuereinheit (380) dem Motorgehäuseabschnitt (408) zugeordnet ist, dass insbesondere die auf einer Schaltungsplatine (382) angeordnete Steuerschaltung (384) der Schwenksteuereinheit (380) in dem Motorgehäuseabschnitt (408) angeordnet ist.

19. Anhängekupplung nach einem der Ansprüche 12 bis 17, **dadurch gekennzeichnet, dass** die Schwenksteuereinheit (380) eine Steuerschaltung (384) aufweist, welche mittels einer Datenverarbeitungseinheit (386) einerseits mit einem fahrzeugseitigen BUS-System kommuniziert und andererseits die Schwenkeinheit (S) gemäß einem vorgegebenen Programmcode steuert, und dass insbesondere die Schwenksteuereinheit (380) eine Steuerschaltung (384) aufweist, welche mittels einer Datenverarbeitungseinheit (386) und einer Motorantriebsschaltung (389) für den Antriebsmotor(180) den Antriebsmotor (180) zum Verschwenken des Kugelhalses zwischen der Arbeitsstellung (A) und der Ruhestellung (R) steuert.
